# EUROPEAN PATENT APPLICATION

(11) **EP 4 243 171 A1**
(43) Date of publication of application: **13.09.2023**
(21) Application number: 22191200.9
(22) Date of filing: 19.08.2022
(51) Int. Cl.: H01M 50/204, H01M 50/249, H01M 50/414, H01M 50/431, H01M 50/446, H01M 50/449, H01M 50/46, H01M 10/24, H01M 50/451, H01M 50/457

(54) **SECONDARY BATTERY, BATTERY PACK, VEHICLE, AND STATIONARY POWER SUPPLY**

(30) Priority: 09.03.2022 JP 2022036388
(71) Applicant: KABUSHIKI KAISHA TOSHIBA, Minato-ku Tokyo 105-0023 (JP)
(72) Inventor: Hotta, Yasuyuki, Tokyo, 105-0023 (JP); Hoshina, Keigo, Tokyo, 105-0023 (JP); Yoshima, Kazuomi, Tokyo, 105-0023 (JP); Matsuno, Shinsuke, Tokyo, 105-0023 (JP)
(74) Representative: Hoffmann Eitle

(57) **Abstract**

According to one approach, provided is a secondary battery including a negative electrode, a positive electrode, a first composite layer joined to the negative electrode, a second composite layer joined to the positive electrode, and an aqueous electrolyte. The first composite layer includes a first principal surface on a reverse side with respect to a surface joined to the negative electrode. The second composite layer includes a second principal surface on a reverse side with respect to a surface joined to the positive electrode and facing the first principal surface. Each of the first composite layer and the second composite layer contains inorganic solid particles and a polymeric material. A peel strength σₛ between the first principal surface and second principal surface is 0.1 N/mm or less. The aqueous electrolyte includes water.

## Description

### FIELD

Approaches described herein relate generally to a secondary battery, a battery pack, a vehicle, and a stationary power supply.

### BACKGROUND

Nonaqueous electrolyte batteries such as lithium ion batteries are used as power sources in a wide range of fields. The forms of nonaqueous electrolyte batteries span over many, from small ones for various kinds of electronic devices and the like to large ones for electric vehicles and the like. The nonaqueous electrolyte batteries require safety measures since nonaqueous electrolytes containing flammable substances such as ethylene carbonate are used in the batteries.

Development of aqueous electrolyte batteries which use aqueous electrolytes containing nonflammable aqueous solvents, in place of the nonaqueous electrolytes, has been underway.

### BRIEF DESCRIPTION OF THE DRAWINGS

FIG. 1 is a cross-sectional view schematically showing an example of an electrode group that may be included in a secondary battery according to an approach.
FIG. 2 is a cross-sectional view schematically showing another example of an electrode group that may be included in the secondary battery according to the approach.
FIG. 3 is a cross-sectional view schematically showing an example of the secondary battery according to the approach.
FIG. 4 is a cross-sectional view of the secondary battery shown in FIG. 3 taken along a line IV - IV.
FIG. 5 is a partially cut-out perspective view schematically showing another example of the secondary battery according to the approach.
FIG. 6 is an enlarged cross-sectional view of section E of the secondary battery shown in FIG. 5.
FIG. 7 is a perspective view schematically showing an example of a battery module according to an approach.
FIG. 8 is a perspective view schematically showing an example of a battery pack according to an approach.
FIG. 9 is an exploded perspective view schematically showing another example of the battery pack according to the approach.
FIG. 10 is a block diagram showing an example of an electric circuit of the battery pack shown in FIG. 9.
FIG. 11 is a partially see-through diagram schematically showing an example of a vehicle according to an approach.
FIG. 12 is a block diagram showing an example of a system including a stationary power supply according to an approach.

### DETAILED DESCRIPTION

According to one approach, provided is a secondary battery including a negative electrode, a positive electrode, a first composite layer joined to the negative electrode, a second composite layer joined to the positive electrode, and an aqueous electrolyte. The first composite layer includes a first principal surface on a reverse side with respect to a surface joined to the negative electrode. The second composite layer includes a second principal surface on a reverse side with respect to a surface joined to the positive electrode and facing the first principal surface. Each of the first composite layer and the second composite layer contains inorganic solid particles and a polymeric material. A peel strength os between the first principal surface and second principal surface is 0.1 N/mm or less. The aqueous electrolyte includes water.

According to another approach, provided is a battery pack including the secondary battery according to the above approach.

According to still another approach, provided is a vehicle including the battery pack according to the above approach.

According to yet another approach, provided is a stationary power supply including the battery pack according to the above approach.

According to the above approaches, a secondary battery and battery pack exhibiting high charge-discharge efficiency and high life performance, and a vehicle and a stationary supply including the battery pack, can be provided.

In general, the potential window of an aqueous electrolyte is narrower than the potential window of a nonaqueous electrolyte. Hence, in aqueous electrolyte batteries, water in the aqueous electrolyte may undergo electrolysis during the initial charge depending on the combination of the positive electrode and the negative electrode. Accordingly, separators used in aqueous electrolyte batteries are demanded to suppress the contact of water with the electrodes, that is, a denseness that exhibits high water shielding property is demanded.

In addition, in each of secondary batteries using lithium metal or zinc metal as an electrode and secondary batteries using an electrolyte containing lithium ions or zinc ions, there is concern that depositions such as lithium dendrites or zinc dendrites become generated on the electrodes upon charge and discharge. When these dendrites break through the separator, internal short circuits may occur. The separator is demanded to be dense also from the viewpoint of being difficult to be broken through by the dendrites.

Examples of separators having particularly high denseness include solid electrolyte membranes. Solid electrolyte membranes are membranes formed only of solid electrolyte particles having ion conductivity. Solid electrolyte membranes can selectively allow only specific ions to pass through without allowing the solvent to pass through, and thus exhibit complete water shielding property. However, solid electrolyte membranes exhibit low flexibility, and thus are not sufficiently durable. Moreover, in order to use solid electrolyte membranes as a separator, solid electrolyte membranes are required to have a certain degree or more of thickness, making it difficult to increase the energy density of the battery.

In order to solve this problem, a polymer composite membrane in which solid electrolyte particles are bound to each other through a polymeric material has been proposed. The polymer composite membrane does not exhibit as complete a water shielding property as solid electrolyte membranes, but is highly dense and can be impregnated with a small amount of aqueous electrolyte. Moreover, the polymer composite membrane is superior to the solid electrolyte membrane in flexibility and can also be made thin.

### First Approach

According to a first approach, a secondary battery is provided. The secondary battery includes a negative electrode, a positive electrode, a first composite layer, a second composite layer, and an aqueous electrolyte. The first composite layer is joined to the negative electrode, and the second composite layer is joined to the positive electrode. The first composite layer includes a first principal surface on a reverse side with respect to a surface joined to the negative electrode. The second composite layer includes a second principal surface on a reverse side with respect to a surface joined to the positive electrode, and which faces the first principal surface. The first composite layer and the second composite layer each contain inorganic solid particles and a polymeric material. A peel strength σₛ between the first principal surface and second principal surface is 0.1 N/mm or less. The aqueous electrolyte includes water.

In the secondary battery having the above configuration, the composite layers functioning as a separator for separating the negative electrode and the positive electrode are formed on both of the electrodes. The first composite layer on the negative electrode side and the second composite layer on the positive electrode side both include the inorganic solid particles and the polymeric material, and may be, for example, polymer composite membranes. By having the first and second composite layers respectively joined onto the surfaces of the negative and positive electrodes, the contact between water in the electrolyte and the material contained in the electrode is reduced, thereby suppressing electrolysis of water. In addition, by having not only the first composite layer formed on the negative electrode but also the second composite layer formed on the positive electrode, nonconformity of efficiency balance between the positive electrode and the negative electrode can be suppressed. Thus, the secondary battery can exhibit high charge-discharge efficiency. Furthermore, the secondary battery can exhibit high life performance.

The negative electrode, positive electrode, first composite layer, and second composite layer may configure an electrode group. The aqueous electrolyte may be held in the electrode group.

The secondary battery according to the approach may be, for example, a lithium ion secondary battery or a sodium ion secondary battery. Moreover, the secondary battery includes an aqueous electrolyte secondary battery including an aqueous electrolyte.

In addition, the secondary battery may further include a container member that houses the electrode group and the aqueous electrolyte.

Furthermore, the secondary battery may further include a negative electrode terminal electrically connected to the negative electrode and a positive electrode terminal electrically connected to the positive electrode.

An outer principal surface of the first composite layer, which is located on a side opposite to the interface where the negative electrode and the first composite layer are joined, is taken as a first principal surface. An outer principal surface of the second composite layer, which is located on a side opposite to the interface where the positive electrode and the second composite layer are joined, is taken as a second principal surface. The first principal surface, which corresponds to a reverse surface with respect to the surface of the first composite layer joined to the negative electrode, and the second principal surface, which corresponds to a reverse surface with respect to the surface of the second composite layer joined to the positive electrode, face each other. The first principal surface and the second principal surface may be in contact with each other to form an interface. Alternatively, the first principal surface and the second principal surface may not be directly in contact with each other, for example, with an aqueous electrolyte being deposited therebetween. Since the aqueous electrolyte includes water and thus has excellent electrical conductivity, the battery resistance does not increase even if the aqueous electrolyte is deposited between the first principal surface and the second principal surface. For a nonaqueous electrolyte battery, if a nonaqueous solvent is deposited between the positive and negative electrodes, an increase in the battery resistance is seen. This is considered to result from the nonaqueous electrolyte having a lower ion conductivity in comparison to the aqueous electrolyte. In the secondary battery according to the present approach, even if the first principal surface and the second principal surface are in contact with each other, the first principal surface and the second principal surface are not in a bound state. Thus, a peel strength σₛ between them is 0.1 N/mm or less (including 0 N/mm) . As a matter of course, if the first principal surface and the second principal surface are not in contact with each other, the peel strength σₛ between them is zero. The peel strength σₛ is measured by the surface/interface cutting method described later.

The secondary battery may further include another separator independent from the first and second composite layers. The other separator may be provided, for example, between the first composite layer and the second composite layer. In this case, the first principal surface of the first composite layer and the second principal surface of the second composite layer face each other via the other separator. The other separator may be impregnated with an aqueous electrolyte. If a member other than the composite layers or electrodes, such as the other separator, is interposed between the first principal surface and the second principal surface, the peel strength σₛ between the first principal surface and the second principal surface is deemed to be zero.

Since the first composite layer and the second composite layer are respectively joined to the negative electrode and the positive electrode, side reactions causing electrolysis and gas generation (e.g., hydrogen generation or oxygen generation) in each electrode is reduced; however, full elimination of side reactions is difficult. For this reason, a small amount of gas is generated every time charge and discharge are performed. By having the first principal surface of the first composite layer and the second principal surface of the second composite layer not being bound, the generated gas can be efficiently released outside the system of the electrode group. Thus, deterioration in battery performance resulting from gas accumulation can be avoided.

Hereinafter, the negative electrode, positive electrode, first and second composite electrodes, other separator, aqueous electrolyte, container member, negative electrode terminal, and positive electrode terminal will be described in detail.

### (Negative Electrode)

The negative electrode may include a current collector (negative electrode current collector) and a negative electrode active material-containing layer disposed on at least one principal surface of the current collector. The negative electrode active material-containing layer contains a negative electrode active material, and optionally an electro-conductive agent and a binder.

The negative electrode active material-containing layer contains the negative electrode active material. The negative electrode active material-containing layer may be supported on principal surfaces on both of reverse surfaces of the negative electrode current collector.

The negative electrode active material-containing layer desirably contains, as an active material, a negative electrode active material including a compound having a lithium ion insertion-extraction potential of 1 V to 3 V (vs. Li/Li⁺) relative to the oxidation-reduction potential of lithium.

In an aqueous electrolyte battery including a negative electrode containing a compound having a lithium ion insertion-extraction potential in the above range as the negative electrode active material, water contained in the solvent of the aqueous electrolyte may undergo electrolysis inside the negative electrode and in vicinity of the negative electrode at the time of the initial charge. This is because the potential of the negative electrode decreases as lithium ions are inserted into the negative electrode active material at the time of the initial charge. When the negative electrode potential decreases below the hydrogen generation potential, a part of water is decomposed into hydrogen (H₂) and hydroxide ions (OH-) inside and in vicinity of the negative electrode. As a result, the pH of the aqueous electrolyte present inside and in vicinity of the negative electrode thus increases.

The hydrogen generation potential of the negative electrode depends on the pH of the aqueous electrolyte. In other words, the hydrogen generation potential of the negative electrode decreases when the pH of the aqueous electrolyte in contact with the negative electrode increases. In a battery using a negative electrode active material for which the lower limit value of the lithium ion insertion-extraction potential is 1 V or more (vs. Li/Li⁺), the potential of the negative electrode is lower than the hydrogen generation potential at the time of the initial charge, but the potential of the negative electrode is likely to be higher than the hydrogen generation potential after the initial charge, and thus the decomposition of water in the negative electrode is less likely to occur.

Examples of the compound having a lithium ion insertion-extraction potential of 1 V or more and 3 V or less (vs. Li/Li⁺) relative to the oxidation-reduction potential of lithium include oxides of titanium and titanium-containing oxides. Examples of the titanium-containing oxide include lithium titanium composite oxide, niobium titanium composite oxide, and sodium niobium titanium composite oxide. The negative electrode active material may include one or more of oxides of titanium and titanium-containing oxides.

Examples of the oxide of titanium include titanium oxide having a monoclinic structure, titanium oxide having a rutile structure, and titanium oxide having an anatase structure. For the titanium oxide having each of the crystal structures, the composition before charge can be represented as TiO₂ and the composition after charge can be represented as Li_{y}TiO₂ (subscript y is 0 ≤ y ≤ 1). Further, for the titanium oxide having the monoclinic structure, the structure before charge can be represented as TiO₂(B).

Examples of the lithium titanium oxide include a lithium titanium oxide having a spinel structure (e.g., a compound represented by Li₄₊ₓTi₅O₁₂ where -1 ≤ x ≤ 3), a lithium titanium oxide having a ramsdellite structure (e.g., a compound represented by Li₂₊ₓTi₃O₇ where -1 ≤ x ≤ 3), a compound represented by Li_{1+y}Ti₂O₄ where 0 ≤ y ≤ 1, a compound represented by Li_{1.1+y}Ti_{1.8}O₄ where 0 ≤ y ≤ 1, a compound represented by Li_{1.07+y}Ti_{1.86}O₄ where 0 ≤ y ≤ 1, and a compound represented by Li_{z}TiO₂ where 0 < z ≤ 1. The lithium titanium oxide may be a lithium-titanium composite oxide having a dopant introduced therein.

The niobium titanium composite oxides include, for example, a compound represented by LiₐTiMe_{b}Nb_{2±c}O_{7±σ}, where 0 ≤ a ≤ 5, 0 ≤ b ≤ 0.3, 0 ≤ c ≤ 0.3, 0 ≤ σ ≤ 0.3, and Me is one or more selected from the group consisting of Fe, V, Mo, and Ta.

The sodium niobium titanium composite oxide includes, for example an orthorhombic Na-containing niobium titanium composite oxide represented by Li_{2+d}Na₂₋ₑMe1_{f}Ti_{6-g-h}Nb_{g}Me2ₕO_{14+δ}, where 0 ≤ d ≤ 4, 0 ≤ e < 2, 0 ≤ f < 2, 0 < g < 6, 0 ≤ h < 3, g+h < 6, -0.5 ≤ δ ≤ 0.5, Me1 includes one or more selected from the group consisting of Cs, K, Sr, Ba and Ca, and Me2 includes one or more selected from the group consisting of Zr, Sn, V, Ta, Mo, W, Fe, Co, Mn, and Al.

As the negative electrode active material, the titanium oxide of anatase structure, the titanium oxide of monoclinic structure, the lithium titanium oxide of spinel structure, the niobium titanium composite oxide, or a mixture thereof is preferably used. On one hand, when the titanium oxide of anatase structure, titanium oxide of monoclinic structure, or lithium titanium composite oxide of spinel structure is used as the negative electrode active material, by combining the negative electrode with, for example, a positive electrode using a lithium manganese composite oxide as a positive electrode active material, high electromotive force can be obtained. On the other hand, by using the niobium titanium composite oxide, high capacity can be attained.

The negative electrode active material may be contained in the active material-containing layer, for example, in the form of particles. The negative electrode active material particles may be primary particles, secondary particles which are agglomerates of the primary particles, or a mixture of single primary particles and secondary particles. The shape of the particles is not particularly limited, and may be, for example, a spherical shape, an elliptical shape, a flat shape, a fibrous shape, or the like.

The secondary particles of the negative electrode active material can be obtained by, for example, the following method. First, the raw materials of the active material are reacted for synthesis to produce an active material precursor having an average particle size of 1 µm or less. After that, the active material precursor is subjected to a firing treatment, and a grinding treatment is performed using a grinder such as a ball mill or a jet mill. Next, in a firing treatment, the active material precursor is agglomerated to grow secondary particles with a larger particle size.

The average particle size (diameter) of the secondary particles of the negative electrode active material is preferably 3 µm or more, and more preferably 5 µm to 20 µm. Within this range, since the surface area of the active material is small, decomposition of water can further be suppressed.

The average particle size of the primary particles of the negative electrode active material is preferably 1 µm or less. This shortens the diffusion distance of Li ions within the active material and increases the specific surface area. For this reason, excellent high input performance (rapid charge) can be obtained. On the other hand, if the average particle size of the primary particles of the negative electrode active material is small, agglomeration of the particles readily occurs. If agglomeration of the particles of the negative electrode active material occurs, the aqueous electrolyte is readily unevenly distributed towards the negative electrode within the secondary battery, and the ionic species may be exhausted in the counter electrode. For this reason, the average particle size of the primary particles of the negative electrode active material is preferably 0.001 µm or more. The average particle size of the primary particles of the negative electrode active material is more preferably 0.1 µm to 0.8 µm.

The primary particle size and the secondary particle size, here, means a particle size with which a volume integrated value becomes 50% in a particle size distribution obtained by a laser diffraction particle size distribution measuring apparatus. As the laser diffraction particle size distribution measuring apparatus, Shimadzu SALD-300 is used, for example. For measurement, luminous intensity distribution is measured 64 times at intervals of 2 seconds. As a sample for performing the particle size distribution measurement, used is a dispersion obtained by diluting the active material particles with N-methyl-2-pyrrolidone such that the concentration becomes 0.1 mass% to 1 mass%. Alternatively, used is a measurement sample obtained by dispersing 0.1g of active material in 1 ml to 2 ml of distilled water containing a surfactant.

The specific surface area of the negative electrode active material in the BET method by nitrogen (N₂) adsorption falls within the range of, for example, 3 m²/g to 200 m²/g. If the specific surface area of the negative electrode active material falls within this range, the affinity between the negative electrode and the aqueous electrolyte can be made higher. The specific surface area can be obtained by, for example, the same method as that to the later-described measurement method for the specific surface area of the negative electrode active material-containing layer.

The porosity of the negative electrode active material-containing layer is desirably 20% to 50%. This makes it possible to obtain a negative electrode having good affinity with respect to the aqueous electrolyte and also having a high density. The porosity of the negative electrode active material-containing layer is more preferably 25% to 40%. The method for measuring the porosity of the active material-containing layer will be described later.

The specific surface area of the negative electrode active material-containing layer by the BET method with nitrogen (N₂) adsorption is more preferably 3 m²/g to 50 m²/g. With the specific surface area of the negative electrode active material-containing layer of 3 m²/g or more, good affinity between the negative electrode active material and the aqueous electrolyte can be achieved. As a result, the interfacial resistance of the negative electrode is suppressed, and the output performance and the charge-discharge cycle performance can be maintained high. By limiting the specific surface area of the active material-containing layer to 50 m²/g or less, ionic species ionized from the electrolyte salt included in the aqueous electrolyte do not become biased towards the negative electrode, thus preventing a shortage of the ionic species in the positive electrode. Thereby, the output performance and the charge-discharge cycle performance can be maintained high.

The specific surface area can be obtained by, for example, the following method. In a case where the electrode including the active material-containing layer to be measured is assembled into a secondary battery, the secondary battery is disassembled, and a part of the active material-containing layer is extracted. Next, in nitrogen gas at 77 K (boiling point of nitrogen), while a nitrogen gas pressure P (mmHg) is gradually increased, the nitrogen gas adsorption amount (mL/g) of the sample is measured at each pressure P. Then, an adsorption isotherm is obtained by plotting the adsorption amount of nitrogen gas with respect to each relative pressure P/P₀, taking the value obtained by dividing the pressure P (mmHg) by a saturated vapor pressure P₀ (mmHg) of nitrogen gas as the relative pressure P/P₀. Then, a BET plot is calculated from the nitrogen adsorption isotherm and the BET equation, and a specific surface area is obtained using the BET plot. For the calculation of the BET plot, a BET multipoint method is used.

The electro-conductive agent is blended in as needed to raise current collection performance and suppress the contact resistance between the negative electrode active material and the current collector. Examples of the electro-conductive agent include carbonaceous materials such as acetylene black, Ketjen black, graphite, and coke. The electro-conductive agent may be of one species, or two or more species may be used in mixture.

The binder has a function of binding the negative electrode active material and the electro-conductive agent. As the binder, at least one selected from the group consisting of, for example, polytetrafluoroethylene (PTFE), polyvinylidene fluoride (PVdF), a cellulose based polymer such as carboxymethyl cellulose (CMC), fluororubber, styrene butadiene rubber, an acrylic resin or a copolymer thereof, polyacrylic acid, and polyacrylonitrile may be used, though the binder is not limit to the above. For example, a polymeric material included in the first composite layer may be used as the binder. By using as the binder used for the negative electrode active material-containing layer, the same material as the polymeric material used for the first composite layer, the degree of binding between the two, namely, the peel strength σₙ can be improved. Details of the polymeric material for the composite layer will be described later. The binder may be of one species, or two or more species may be used in mixture.

The blending ratios of the negative electrode active material, electro-conductive agent, and binder in the negative electrode active material-containing layer are preferably 70% by mass to 95% by mass, 3% by mass to 20% by mass, and 2% by mass to 10% by mass, respectively. If the blending ratio of the electro-conductive agent is 3 mass% or more, the electrical conductivity of the active material-containing layer can be improved, and if the blending ratio is 20% by mass or less, decomposition of the aqueous electrolyte on the electro-conductive agent surface can be reduced. If the blending ratio of the binder is 2% by mass or more, a sufficient electrode strength can be obtained. Since the binder is a material exhibiting electrical insulation, by having the blending ratio thereof be 10% by mass or less, insulating portions within the electrode can be diminished.

The negative electrode current collector may include, on at least a part thereof, a portion not having the negative electrode active material-containing layer disposed thereon at the principal surfaces on both the front and reverse sides of that part. This portion may serve as a negative electrode current collecting tab. Alternatively, a current collecting tab separate from the negative electrode current collector may be electrically connected to the negative electrode. If the negative electrode active material-containing layer is provided on each of the principal surfaces on both sides of the negative electrode current collector, the negative electrode current collector may include, on at least a part of one principal surface thereof, a portion not in contact with any negative electrode active material-containing layer at that part. For example, a negative electrode current collecting tab separate from the negative electrode current collector may be connected to this portion.

As the material for the negative electrode current collector, used is a substance that is electrochemically stable within the electrode potential range at which alkali metal ions are inserted and extracted. The negative electrode current collector may be, for example, zinc foil, aluminum foil, or an aluminum alloy foil including one or more selected from the group consisting of magnesium (Mg), titanium (Ti), zinc (Zn), manganese (Mn), iron (Fe), copper (Cu), and silicon (Si) . The negative electrode current collector is preferably such a foil whose surface is coated with a metal having high hydrogen overvoltage, such as Zn and Sn. The negative electrode current collector may have another form, such as a porous body or a mesh. The thickness of the negative electrode current collector is preferably 5 µm to 20 µm. A negative electrode current collector having such a thickness can maintain balance between the strength of the electrode and weight reduction.

### (Positive Electrode)

The positive electrode may include a current collector (positive electrode current collector) and a positive electrode active material-containing layer disposed on at least one principal surface of the current collector. The positive electrode active material-containing layer contains a positive electrode active material, and optionally an electro-conductive agent and a binder.

The positive electrode active material-containing layer contains the positive electrode active material. The positive electrode active material-containing layer may be supported on principal surfaces on both of reverse surfaces of the positive electrode current collector.

As the positive electrode active material, a compound whose lithium ion insertion-extraction potential is 2.5 V (vs. Li/Li⁺) to 5.5 V (vs. Li/Li⁺) with respect to the oxidation-reduction potential of lithium may be used. The positive electrode may contain one compound alone as the positive electrode active material, or may contain two or more compounds as the positive electrode active material.

Examples compounds that may be used as the positive electrode active material include a lithium manganese composite oxide, a lithium nickel composite oxide, a lithium cobalt aluminum composite oxide, a lithium nickel cobalt manganese composite oxide, a spinel lithium manganese nickel composite oxide, a lithium manganese cobalt composite oxide, a lithium iron oxide, a lithium fluorinated iron sulfate, a phosphate compound having an olivine crystal structure (for example, a compound represented by Li_{z}FePO₄ where 0 < z ≤ 1, a compound represented by Li_{z}MnPO₄ where 0 < z ≤ 1), and the like. The phosphate compound having an olivine crystal structure has excellent thermal stability.

Examples of compounds that allow a high positive electrode potential to be obtained include lithium manganese composite oxides of spinel structure, e.g., a compound represented by Li_{z}Mn₂O₄ where 0 < z ≤ 1 or a compound represented by Li_{z}MnO₂ where 0 < z ≤ 1; a lithium nickel aluminum composite oxide, e.g., a compound represented by Li_{z}Ni₁₋ⱼAlⱼO₂ where 0 < z ≤ 1 and 0 < j < 1; a lithium cobalt composite oxide, e.g. , a compound represented by Li_{z}CoO₂ where 0 < z ≤ 1; a lithium nickel cobalt composite oxide, e.g., a compound represented by Li_{z}Ni₁₋ⱼ₋ₖCoⱼMnₖO₂ where 0 < z ≤ 1, 0 < j < 1, and 0 ≤ k < 1; a lithium manganese cobalt composite oxide, e.g., a compound represented by Li_{z}MnⱼCo₁₋ⱼO₂ where 0 < z ≤ 1 and 0 < j < 1; a spinel lithium manganese nickel composite oxide, e.g., a compound represented by Li_{z}Mn₂₋ᵢNiᵢO₄ where 0 < z ≤ 1 and 0 < i < 2; a lithium phosphate having an olivine structure, e.g., a compound represented by Li_{z}FePO₄ where 0 < z ≤ 1, a compound represented by Li_{z}Fe_{1-y}Mn_{y}PO₄ where 0 < z ≤ 1 and 0 ≤ y ≤ 1, or a compound represented by Li_{z}CoPO₄ where 0 < z ≤ 1; and a fluorinated iron sulfate (e.g., a compound represented by Li_{z}FeSO₄F where 0 < z ≤ 1).

The positive electrode active material preferably includes at least one selected from the group consisting of the lithium cobalt composite oxide, the lithium manganese composite oxide, and the lithium phosphate having an olivine structure. The operating potentials of these compounds are 3.5 V (vs. Li/Li⁺) to 4.2 V (vs. Li/Li⁺). That is, the operating potentials of these compounds as active material are relatively high. When these compounds are used in combination with the above-described negative electrode active material such as the spinel lithium titanate or the anatase titanium oxide, a high battery voltage can be obtained.

The positive electrode active material is contained in the positive electrode in a form of, for example, particles. The positive electrode active material particles may be solitary primary particles, secondary particles that are agglomerates of primary particles, or a mixture of primary particles and secondary particles. The shape of a particle is not particularly limited and may be, for example, spherical, elliptical, flat, or fibrous.

The average particle size (diameter) of the primary particles of the positive electrode active material is preferably 10 µm or less, and more preferably 0.1 µm to 5 µm. The average particle size (diameter) of the secondary particles of the positive electrode active material is preferably 100 µm or less, and more preferably 10 µm to 50 µm. The primary particle size and the secondary particle size of the positive electrode active material can be measured by the same method as that for the negative electrode active material particles.

The electro-conductive agent is mixed as needed to raise current collection performance and suppress the contact resistance between the positive electrode active material and the current collector. Examples of the electro-conductive agent include carbonaceous materials such as acetylene black, Ketjen black, graphite, and coke. The electro-conductive agent may be of one species, or two or more species may be used in mixture.

The binder has a function of binding the positive electrode active material and the electro-conductive agent. As the binder, for example, at least one selected from the group consisting of polytetrafluoroethylene (PTFE), polyvinylidene fluoride (PVdF), fluororubber, ethylene-butadiene rubber, polypropylene (PP), polyethylene (PE), carboxymethyl cellulose (CMC), polyimide (PI), polyacrylimide (PAI) may be used, though the binder is not limit to the above. For example, a polymeric material included in the second composite layer may be used as the binder. By using as the binder used for the positive electrode active material-containing layer, the same material as the polymeric material used for the second composite layer, the degree of binding between the two, namely, the peel strength σₚ can be improved. The binder may be of one species, or two or more species may be used in mixture.

The blending proportions of the positive electrode active material, the electro-conductive agent, and the binder in the positive electrode active material-containing layer are preferably 70% by mass to 95% by mass, 3% by mass to 20% by mass, and 2% by mass to 10% by mass, respectively. If the blending proportion of the electro-conductive agent is 3% by mass or more, the electrical conductivity of the positive electrode can be made good. If the blending proportion of the electro-conductive agent is 20% by mass or less, decomposition of the aqueous electrolyte on the electro-conductive agent surface can be reduced. If the blending proportion of the binder is 2% by mass or more, a sufficient electrode strength can be obtained. If the blending proportion of the binder is 10 % by mass or less, insulating portions of the electrode can be diminished.

The positive electrode current collector may include, on at least a part thereof, a portion not having the positive electrode active material-containing layer disposed thereon at the principal surfaces on both the front and reverse sides of that part. This portion may serve as a positive electrode current collecting tab. Alternatively, a current collecting tab separate from the positive electrode current collector may be electrically connected to the positive electrode. If the positive electrode active material-containing layer is provided on each of the principal surfaces on both sides of the negative electrode current collector, the positive electrode current collector may include, on at least a part of one principal surface thereof, a portion not in contact with any positive electrode active material-containing layer at that part. For example, a positive electrode current collecting tab separate from the positive electrode current collector may be connected to this portion.

The positive electrode current collector includes, for example, a metal such as stainless steel, aluminum (Al), or titanium (Ti). The positive electrode current collector has a form of, for example, a foil, a porous body, or a mesh. To prevent corrosion by the reaction between the positive electrode current collector and the aqueous electrolyte, the surface of the positive electrode current collector may be covered with another element. The positive electrode current collector is preferably made of a material with excellent corrosion resistance and oxidation resistance, for example, a Ti foil. Note, that when Li₂SO₄ is used as the aqueous electrolyte, Al may be used as the positive electrode current collector because corrosion does not proceed.

### (First Composite Layer and Second Composite Layer)

In regard to the first composite layer and the second composite layer, the first composite layer is disposed on the negative electrode surface, the second composite layer is disposed on the positive electrode surface, and they are positioned between the negative electrode and the positive electrode. The first composite layer is provided on, for example, the negative electrode active material-containing layer. Similarly, the second composite layer may be provided on, for example, the positive electrode active material-containing layer. For an electrode having active material-containing layers supported on both surfaces of the current collector, for example, the first composite layer and/or second composite layer may be provided on the principal surface of one active material-containing layer, or may be provided on the principal surfaces of both of the active material-containing layers.

Each composite layer contains inorganic solid particles and a polymeric material. Each composite layer serves as a separator electrically insulating the negative electrode from the positive electrode. The first composite layer and the second composite layer may be collectively referred to as composite layers.

The first composite layer is joined to the negative electrode, and the second composite layer is joined to the positive electrode. The peel strength σₙ representing the degree of joining between the negative electrode and the first composite layer is preferably greater than 0.3 N/mm. Similarly, the peel strength σₚ representing the degree of joining between the positive electrode and the second composite layer is preferably greater than 0.3 N/mm. The peel strengths σₙ and σₚ are measured by the surface/interface cutting method described later.

The first composite layer and the second composite layer each preferably have a porosity of 20% or less. By limiting the porosity to 20% or less, flow of water within the aqueous electrolyte in vicinity of the negative electrode and the positive electrode can be diminished. This makes it possible to suppress side reactions such as water decomposition from continuously takin place, thereby increasing battery performance. A composite layer having a low porosity also has a higher denseness. In the secondary battery, an aqueous electrolyte having good electrical conductivity is adopted, and therefore, even if the composite layer is dense, an increase in electrical resistance is not significant. In a nonaqueous electrolyte battery, on the other hand, a nonaqueous solvent does not have high electrical conductivity, and thus, if the dense composite layer or separator is used, the electrical resistance may increase. The porosities of first composite layer and the second composite layer are preferably 18% or less, and more preferably 15% or less.

As inorganic solid particles contained in the composite layer, examples include oxide-based ceramics such as alumina, silica, zirconia, yttria, magnesium oxide, calcium oxide, barium oxide, strontium oxide, and vanadium oxide, carbonates and sulfates such as sodium carbonate, potassium carbonate, magnesium carbonate, calcium carbonate, barium carbonate, lanthanum carbonate, cerium carbonate, calcium sulfate, magnesium sulfate, aluminum sulfate, gypsum, and barium sulfate, phosphates such as hydroxyapatite, lithium phosphate, zirconium phosphate, and titanium phosphate, and nitride-based ceramics such as silicon nitride, titanium nitride, and boron nitride. The inorganic particles mentioned above may be in the form of a hydrate.

The inorganic solid particles preferably include solid electrolyte particles having ion conductivity of alkali metal ions. Specifically, inorganic solid electrolyte particles having ion conductivity with respect to lithium ions and sodium ions are more preferable.

Examples of the inorganic solid particles exhibiting lithium ion conductivity include an oxide-based solid electrolyte or a sulfide-based solid electrolyte. Preferably used as the oxide-based solid electrolyte is a lithium phosphate solid electrolyte having a NASICON (Sodium (Na) Super Ionic Conductor) structure represented by a general formula Li₁₊ᵤM₂(PO₄)₃. M in the above-described general formula is, for example, one or more selected from the group consisting of titanium (Ti), germanium (Ge), strontium (Sr), zirconium (Zr), tin (Sn), aluminum (Al), and calcium (Ca) . The subscript u is within the range of 0 ≤ u ≤ 2. The lithium phosphate solid electrolyte represented by the general formula LiM₂(PO₄)₃ has an ionic conductivity of, for example, 1 × 10⁻⁵ S/cm to 1 × 10⁻³ S/cm.

Specific examples of the lithium phosphate solid electrolyte having the NASICON structure include a LATP compound represented by Li₁₊ᵥAlᵥTi₂₋ᵥ(PO₄)₃ where 0.1 ≤ v ≤ 0.5; a compound represented by Li_{1+y}Al_{w}M1_{2-w}(PO₄)₃ where M1 is one or more selected from the group consisting of Ti, Ge, Sr, Zr, Sn, and Ca, 0 ≤ y ≤ 1, and 0 ≤ w ≤ 1; a compound represented by Li₁₊ᵤAlᵤGe₂₋ᵤ(PO₄)₃ where 0 ≤ u ≤ 2; a compound represented by Li₁₊ᵤAlᵤZr₂₋ᵤ(PO₄)₃ where 0 ≤ u ≤ 2; a compound represented by Li_{i+p+qAlpM}a₂-_{pS}i_{qP3}-_{qOi2} where Mα is one or more selected from the group consisting of Ti and Ge, 0 < p ≤ 2, and 0 ≤ q < 3; and a compound represented by Li₁₊₂ₘZr₁₋ₘCaₘ(PO₄)₃ where 0 ≤ m < 1. Li₁₊₂ₘZr₁₋ₘCaₘ(PO₄)₃ is preferably used as inorganic solid electrolyte particles because of its high water-resistance, low reducing ability, and low cost.

In addition to the above lithium phosphate solid electrolyte, examples of the oxide-base solid electrolyte include amorphous LIPON compounds represented by LiᵣPOₛNₜ where 2.6 ≤ r ≤ 3.5, 1.9 ≤ + s ≤ 3.8, and 0.1 ≤ t ≤ 1.3 (e.g., Li_{2.9}PO_{3.3}N_{0.46}); a compound having a garnet structure represented by La₅₊ₗAₗLa₃₋ₗMβ₂O₁₂ where A is one or more selected from the group consisting of Ca, Sr, and Ba, Mβ is one or more selected from the group consisting of Nb and Ta, and 0 ≤ 1 ≤ 0.5; a compound represented by Li₃Mγ₂₋ₗL₂O₁₂ where Mγ is one or more selected from the group consisting of Ta and Nb, L may include Zr, and 0 ≤ 1 ≤ 0.5; a compound represented by Li₇₋₃ₗAlₗLa₃Zr₃O₁₂ where 0 ≤ 1 ≤ 0.5; a LLZ compound represented by Li₅₊ᵤLa₃M2₂₋ᵤZrᵤO₁₂ where M2 is one or more selected from the group consisting of Nb and Ta, and 0 ≤ u ≤ 2 (e.g., Li₇La₃Zr₂O₁₂); and a compound having a perovskite structure and represented by La_{2/3-χ}Li_{χ}TiO₃ where0.3 ≤ χ ≤ 0.7. One species of the solid electrolyte or a mixture of two or more species thereof may be used. LIPON has an ionic conductivity of, for example, 1 × 10⁻⁶ S/cm to 5 × 10⁻⁶ S/cm. LLZ has an ionic conductivity of, for example, 1 × 10⁻⁴ S/cm to 5 × 10⁻⁴ S/cm.

Further, as the solid electrolyte particles having ion conductivity of sodium ions, sodium-containing solid electrolytes may be used. The sodium-containing solid electrolytes are excellent in ion conductivity of sodium ions. Examples of the sodium-containing solid electrolyte include β-alumina, sodium phosphate sulfides, sodium phosphates, and the like. The sodium ion-containing solid electrolyte is preferably in the form of glass-ceramic.

The inorganic solid particles are preferably a solid electrolyte having a lithium ion conductivity of 1 × 10⁻⁵ S/cm or more at 25°C.

Shapes of the inorganic solid particles are not particularly limited, but may be, for example, spherical, elliptical, flat, fibrous, or the like.

The average particle size of the inorganic solid particles is preferably 15 µm or less, and is more preferably 12 µm or less. When the inorganic solid particles have a small average particle size, the denseness of the composite layer can be made high.

The average particle size of the inorganic solid particles is preferably 0.01 µm or more, and is more preferably 0.1 µm or more. When the inorganic solid particles have a large average particle size, aggregation of the particles tends to be suppressed.

The average particle size of the inorganic solid particles refers to a particle size at which a cumulative volume is 50% in a particle-size distribution obtained by a laser diffraction particle size analyzer. As a sample for this particle size analysis, a dispersion solution having the inorganic solid particles diluted with ethanol in a concentration of 0.01% by mass to 5% by mass is used.

The inorganic solid particles respectively included in the first composite layer and the second composite layer may be the same, or those of different species may be used. Further, in each of the composite layers, a single species of inorganic solid particles may be used or plural species of inorganic solid particles may be used in mixture.

In the composite layer, the inorganic solid particles are preferably the main component. The proportion of the inorganic solid particles in the composite layer is preferably 70% by mass or more, more preferably 80% by mass or more, and still more preferably 85% by mass or more from the viewpoint of enhancing the ion conductivity of the composite layer. The proportion of the inorganic solid particles in the composite layer is preferably 95% by mass or less, and more preferably 90% by mass or less from the viewpoint of increasing the film strength of the composite layer. The proportion of the inorganic solid particles in the composite layer can be calculated by thermogravimetric (TG) analysis.

The polymeric material contained in the composite layer enhances the binding between the inorganic solid particles. The weight-average molecular weight of the polymeric material is, for example, 3,000 or more. When the weight-average molecular weight of the polymeric material is 3,000 or more, the binding of the inorganic solid particles can be further enhanced. The weight-average molecular weight of the polymeric material is preferably 3,000 to 5,000,000, more preferably 5,000 to 2,000,000, and further preferably 10,000 to 1,000,000. The weight-average molecular weight of the polymeric material can be obtained by gel permeation chromatography (GPC).

The polymeric material may be a polymer made of a single monomer unit, a copolymer made of plural monomer units, or a mixture thereof. The polymeric material preferably contains a monomer unit constituted by a hydrocarbon having a functional group including one or more selected from the group consisting of oxygen (O), sulfur (S), nitrogen (N), and fluorine (F). In the polymeric material, the proportion of a portion formed from the monomer unit is preferably 70 mol% or more. Such a monomer unit will be referred to as a first monomer unit hereinafter. Additionally, in a copolymer, a monomer unit other than the first monomer unit will be referred to as a second monomer unit. The copolymer of the first monomer unit and the second monomer unit may be an alternating copolymer, a random copolymer, or a block copolymer.

When the proportion occupied by the portion formed of the first monomer unit in the polymeric material is lower than 70 mol%, there is concern that the water shielding properties of the first and second composite layers decrease. The proportion of the portion formed from the first monomer unit in the polymeric material is preferably 90 mol% or more. Most preferably, the proportion of the portion formed from the first monomer unit in the polymeric material is preferably 100 mol%, that is, the polymeric material is most preferably a polymer formed from only the first monomer unit.

The first monomer unit may be a compound whose side chain has a functional group including one or more selected from the group consisting of oxygen (O), sulfur (S), nitrogen (N), and fluorine (F) and whose main chain is formed from carbon-carbon bonds. The hydrocarbon may have one or more functional groups each including one or more elements selected from the group consisting of oxygen (O), sulfur (S), nitrogen (N), and fluorine (F). The functional group in the first monomer unit enhances the conductivity of alkali metal ions passing through the composite layer.

The hydrocarbon that forms the first monomer unit preferably has a functional group including one or more selected from the group consisting of oxygen (O), sulfur (S), and nitrogen (N). When the first monomer unit has such a functional group, the conductivity of alkali metal ions in the composite layer tends to be further enhanced and the internal resistance tends to decrease.

The functional group contained in the first monomer unit preferably includes one or more selected from the group consisting of a formal group, a butyral group, a carboxymethyl ester group, an acetyl group, a carbonyl group, a hydroxyl group, and a fluoro group. In addition, the first monomer unit preferably contains at least one of a carbonyl group and a hydroxyl group in the functional group, and more preferably contains both.

The first monomer unit can be represented by the following formula.

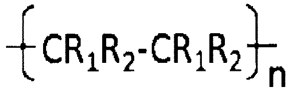

In the formula, R₁ is preferably selected from the group consisting of hydrogen (H), an alkyl group, and an amino group. R₂ is preferably selected from the group consisting of a hydroxyl group (-OH), -OR₁, -COOR₁, -OCOR₁, -OCH(R₁)O-, -CN, -N(R₁)₃, and -SO₂R₁.

Examples of the first monomer unit include one or more selected from the group consisting of vinyl formal, vinyl alcohol, vinyl acetate, vinyl acetal, vinyl butyral, acrylic acid and derivatives thereof, methacrylic acid and derivatives thereof, acrylonitrile, acrylamide and derivatives thereof, styrene sulfonic acid, polyvinylidene fluoride, and tetrafluoroethylene.

The polymeric material preferably contains one or more selected from the group consisting of polyvinyl formal, polyvinyl alcohol (PVA), polyvinyl acetal, polyvinyl butyral (PVB), polymethyl methacrylate, polyvinylidene fluoride (PVdF), polytetrafluoroethylene (PTFE), fluororubber, styrene-butadiene rubber, polyacrylate compounds, imide compounds, and carboxymethyl cellulose (CMC).

The second monomer unit is a compound other than the first monomer unit, that is, a compound that does not have a functional group including one or more selected from the group consisting of oxygen (O), sulfur (S), nitrogen (N), and fluorine (F), or a compound that has the functional group but is not a hydrocarbon. Examples of the second monomer unit include ethylene oxide and styrene. Examples of a polymer formed from the second monomer unit include polyethylene oxide (PEO) and polystyrene (PS).

The species of the functional groups included in the first monomer unit and the second monomer unit can be identified by infrared spectroscopy (Fourier Transform Infrared Spectroscopy: FT-IR) . Whether the first monomer unit is formed from a hydrocarbon can be determined by nuclear magnetic resonance (NMR). In the copolymer of the first monomer unit and the second monomer unit, the proportion occupied by the portion formed from the first monomer unit can be calculated by NMR.

The polymeric material may contain an aqueous electrolyte. The proportion of the aqueous electrolyte that the polymeric material may contain can be grasped based on a water absorption capacity thereof. Here, the water absorption capacity of the polymeric material is given by a value ([Mₚ' - Mₚ] /Mₚ × 100), where the polymeric material is immersed in water at a temperature of 23°C for 24 hours, and a value obtained by subtracting a mass Mₚ of the polymeric material before immersion from a mass Mₚ' of the polymeric material after immersion is divided by the mass Mₚ of the polymeric material before immersion. The water absorption capacity of the polymeric material is considered to be associated with the polarity of the polymeric material.

When a polymeric material having a high water absorption capacity is used, the alkali metal ion conductivity of the composite layer tends to be higher. In addition, when a polymeric material having a high water absorption capacity is used, the binding force between the inorganic solid particles and the polymeric material increases and the flexibility of the composite layer can be enhanced. The water absorption capacity of the polymeric material is preferably 0.01% or more, more preferably 0.5% or more, and further preferably 2% or more.

When a polymeric material having a low water absorption capacity is used, the strength of the composite layer can be enhanced. In other words, when the water absorption capacity of the polymeric material is too high, the composite layer may swell due to the aqueous electrolyte, in some cases. In addition, when the water absorption capacity of the polymeric material is too high, the polymeric material in the composite layer may flow out into the aqueous electrolyte. The water absorption capacity of the polymeric material is preferably 15% or less, more preferably 10% or less, further preferably 7% or less, and particularly preferably 3% or less.

The proportion of the polymeric material in the composite layer is preferably 5% by mass or more, and more preferably 10% by mass or more from the viewpoint of enhancing the flexibility of the composite layer. In addition, the denseness of the composite oxide tends to be higher when the proportion of the polymeric material is greater.

In addition, the proportion of the polymeric material in the composite membrane is preferably 30% by mass or less, more preferably 20% by mass or less, and still more preferably 10% by mass or less from the viewpoint of enhancing the ion conductivity of the composite layer. The proportion of the polymeric material in the composite membrane can be calculated by thermogravimetric (TG) analysis.

The polymeric materials included in the first composite layer and the second composite layer may be the same, or those of different species may be used. In addition, as the polymeric material (s), a single species of polymeric material may be used or plural species of polymeric materials may be used in mixture .

The composite layer may contain a plasticizer and an electrolyte salt in addition to the inorganic solid particles and the polymeric material. For example, when the composite layer contains an electrolyte salt, the alkali metal ion conductivity of the composite layer can be further enhanced.

Both the thickness tₙ of the first composite layer and thickness tₚ of the second composite layer are preferably 3 µm or greater, more preferably 5 µm or greater, and further preferably 7 µm or greater, from the viewpoint that short-circuiting is not likely to occur. In addition, both the thickness tₙ and tₚ of the first and second composite layers are preferably 50 µm or less, more preferably 30 µm or less, and further preferably 20 µm or less, from the viewpoint of enhancing the ion conductivity and energy density.

The thickness tₙ of the first composite layer and thickness tₚ of the second composite layer may be the same or different from each other.

### (Other Separator)

As the other separator, there may be used, for example, a nonwoven fabric or a self-supporting porous film. As materials for the nonwoven fabric or the self-supporting porous film, for example, polyethylene (PE), polypropylene (PP), cellulose, or polyvinylidene fluoride (PVdF) is used. The other separator is preferably a nonwoven fabric formed of cellulose.

The thickness of the other separator is, for example, 1 µm or more and preferably 3 µm or more. The thicker the other separator, less likely does the internal short circuit of the secondary battery occur. The thickness of the other separator is, for example, 30 µm or less and preferably 10 µm or less. The thinner the other separator, the lower the internal resistance of the secondary battery, making the volume energy density of the secondary battery tend to increase.

It is desirable that the other separator to not be bound to each composite layer, as well. Thus, the peel strength between the other separator and each composite layer is desirably 0.1 N/mm or less (including 0 N/mm). By not having the other separator and each composite layer bound to one another, the generated gas can be released more efficiently outside the system of the electrode group.

### (Aqueous Electrolyte)

The aqueous electrolyte contains an aqueous solvent and an electrolyte salt. The aqueous electrolyte may be liquid. A liquid aqueous electrolyte is prepared by dissolving the electrolyte salt serving as a solute in the aqueous solvent.

As the electrolyte salt, for example, a lithium salt, a sodium salt, or a mixture thereof is used. One species or two or more species of electrolyte salts may be used.

As the lithium salt, for example, lithium chloride (LiCl), lithium bromide (LiBr), lithium hydroxide (LiOH), lithium sulfate (Li₂SO₄), lithium nitrate (LiNO₃), lithium acetate (CH₃COOLi), lithium oxalate (Li₂C₂O₄), lithium carbonate (Li₂CO₃), lithium bis(trifluoromethanesulfonyl)imide (LiTFSI; LiN(SO₂CF₃)₂), lithium bis (fluorosulfonyl) imide (LiFSI; LiN(SO₂F)₂), lithium bis(oxalate)borate (LiBOB; LiB[(OCO)₂]₂), or the like may be used.

As the sodium salt, for example, sodium chloride (NaCl), sodium sulfate (Na₂SO₄), sodium hydroxide (NaOH), sodium nitrate (NaNO₃), sodium trifluoromethanesulfonyl amide (NaTFSA), or the like may be used.

As the lithium salt, LiCl is preferably included. When LiCl is used, the lithium ion concentration of the aqueous electrolyte can be made high. Additionally, the lithium salt preferably includes at least one of LiSO₄ and LiOH in addition to LiCl.

In addition, other than the lithium salt, zinc salts such as zinc chloride and zinc sulfate may be added to the electrolytic solution, too. By adding such a compound to the electrolytic solution, a zinc-containing coating layer and/or an oxidized zinc-containing region may be formed in the negative electrode. Such members including zinc exhibit the effect of suppressing hydrogen generation in the electrode where the members are formed.

The mol concentration of lithium ions in the aqueous electrolyte is preferably 3 mol/L or more, more preferably 6 mol/L or more, and much more preferably 12 mol/L or more. When the concentration of the lithium ions in the aqueous electrolyte is high, electrolysis of the aqueous solvent in the electrode can easily be suppressed, and hydrogen generation from the electrode tends to be little.

In the aqueous electrolyte, the aqueous solvent amount is preferably 1 mol or more relative to 1 mol of the salt serving as solute. In a more preferable form, the aqueous solvent amount relative to 1 mol of the salt serving as solute is 3.5 mol or more.

The aqueous electrolyte preferably contains, as an anion species, at least one anion species selected from the group consisting of a chloride ion (Cl⁻), a hydroxide ion (OH⁻), a sulfate ion (SO₄²⁻), and a nitrate ion (NO₃⁻).

The pH of the aqueous electrolyte is preferably 3 to 14, and more preferably 4 to 13. In any approach, the pH is a value measured at 25±2°C.

When the pH value of the aqueous electrolyte rises and the aqueous electrolyte becomes alkaline, on one hand, hydrogen generation at the negative electrode is reduced as described above. On the other hand, in vicinity of the positive electrode, the oxygen evolution potential decreases when the pH becomes higher, making electrolysis of water accompanied by oxygen evolution likely to occur at the positive electrode. Due to the consumption of current by electrolysis, the charge-discharge efficiency on the positive electrode side decreases. In the secondary battery, since the second composite layer is joined to the positive electrode, even if a strongly alkaline electrolyte having a pH of 9 or higher is used, for example, charge-discharge efficiency at the positive electrode is improved.

As the aqueous solvent, a solution containing water may be used. Here, the solution containing water may be pure water or a solvent mixture of water and an organic solvent.

The aqueous electrolyte may be a gel electrolyte. The gel electrolyte is prepared by mixing the above-described liquid aqueous electrolyte and a polymeric compound to obtain a composite. As the polymeric compound, for example, polyvinylidene fluoride (PVdF), polyacrylonitrile (PAN), polyethylene oxide (PEO), and the like may be used.

Whether the aqueous electrolyte contains water can be examined by GC-MS (Gas Chromatography - Mass Spectrometry). In addition, the salt concentration and water content in the aqueous electrolyte can be measured by, for example, ICP (Inductively Coupled Plasma) emission spectrometry. A predetermined amount of aqueous electrolyte is measured out, and the concentration of the contained salt is calculated, thereby calculating the mol concentration (mol/L) . In addition, by measuring the specific gravity of the aqueous electrolyte, the number of moles of the solute and solvent can be calculated.

### (Container Member)

As the container member that houses the electrode group and the aqueous electrolyte, a metal container, a laminated film container, or a resin container may be used.

As the metal container, a metal can made of nickel, iron, stainless steel, or the like and having a rectangular shape or a cylindrical shape may be used. As the resin container, a container made of polyethylene, polypropylene, or the like may be used.

The plate thickness of each of the resin container and the metal container preferably falls within the range of 0.05 mm to 1 mm. The plate thickness is more preferably 0.5 mm or less, and even more preferably 0.3 mm or less.

As the laminated film, for example, a multilayered film formed by covering a metal layer with a resin layer may be used. Examples of the metal layer include a stainless steel foil, an aluminum foil, and an aluminum alloy foil. As the resin layer, a polymer such as polypropylene (PP), polyethylene (PE), nylon, or polyethylene terephthalate (PET) may be used. The thickness of the laminated film preferably falls within the range of 0.01 mm to 0.5 mm. The thickness of the laminated film is more preferably 0.2 mm or less.

The secondary battery may be used in various forms such as a prismatic shape, a cylindrical shape, a flat form, a thin form, and a coin form. In addition, the secondary battery may be a secondary battery having a bipolar structure. A secondary battery having a bipolar structure has an advantage of being able to produce a cell with in-series connection of multiple, using a single cell.

### (Negative Electrode Terminal)

The negative electrode terminal may be formed, for example, from a material that is electrochemically stable within a potential range of 1 V to 3 (vs. Li/Li⁺) with respect to the oxidation-reduction potential of lithium, and having electrical conductivity. Specifically, the material for the negative electrode terminal may include zinc, copper, nickel, stainless steel, aluminum, or an aluminum alloy containing at least one element selected from a group consisting of Mg, Ti, Zn, Mn, Fe, Cu, and Si. As the material for the negative electrode terminal, zinc or a zinc alloy is preferably used. In order to reduce the contact resistance between the negative electrode terminal and the negative electrode current collector (e.g. , the current collecting layer included in the negative electrode construct), the negative electrode terminal is preferably made of the same material as that of the negative electrode current collector.

### (Positive Electrode Terminal)

The positive electrode terminal may be made, for example, from a material that is electrically stable in a potential range of 2.5 V to 4.5 V (vs. Li/Li⁺) with respect to the oxidation-reduction potential of lithium, and having electrical conductivity. Examples of the material for the positive electrode terminal include titanium, aluminum, or an aluminum alloy containing at least one element selected from a group consisting of Mg, Ti, Zn, Mn, Fe, Cu, and Si. In order to reduce the contact resistance between the positive electrode terminal and the positive electrode current collector, the positive electrode terminal is preferably made of the same material as that of the positive electrode current collector.

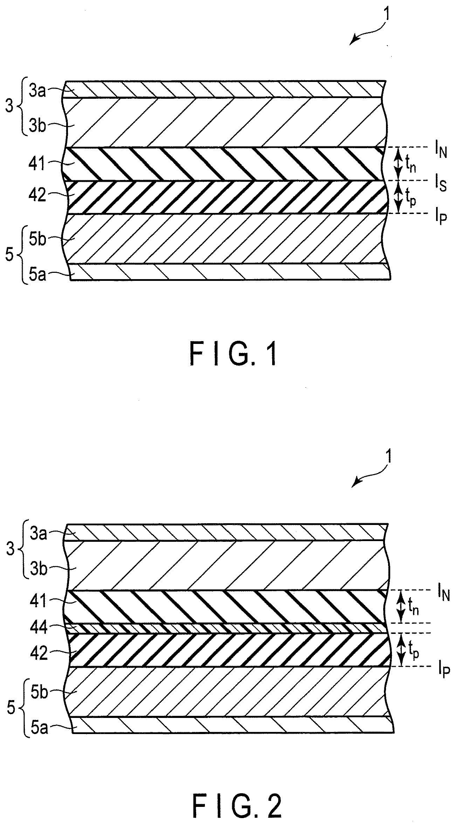

FIG. 1 shows an example of the above-described electrode group. FIG. 1 is a cross-sectional view schematically showing an example of an electrode group that may be included in the secondary battery according to the approach.

An electrode group 1 includes a negative electrode 3, a first composite layer 41, a second composite layer 42, and a positive electrode 5. The negative electrode 3 includes a negative electrode current collector 3a, and a negative electrode active material-containing layer 3b. The positive electrode 5 includes a positive electrode current collector 5a, and a positive electrode active material-containing layer 5b. The first composite layer 41 is joined to a principal surface of the negative electrode active material-containing layer 3b at a position opposite to the negative electrode current collector 3a. The second composite layer 42 is joined to a principal surface of the positive electrode active material-containing layer 5b at a position opposite to the positive electrode current collector 5a.

In the example illustrated, the first principal surface of the first composite layer 41 and the second principal surface of the second composite layer 42 are in contact with each other at an interface Iₛ. The first principal surface is a surface located on a reverse side of the first composite layer 41 with respect to an interface Iₙ between the first composite layer 41 and the negative electrode active material-containing layer 3b. The second principal surface is a surface located on a reverse side of the second composite layer 42 with respect to an interface Iₚ between the second composite layer 42 and the positive electrode active material-containing layer 5b. A peel strength σₛ at the interface Iₛ between the composite layers has a value of 0.1 N/mm or less. The first principal surface and the second principal surface need not be in contact with each other. If not in contact, the peel strength σₛ between the first principal surface and the second principal surface is zero.

FIG. 2 shows another example of the electrode group. The electrode group 1, whose cross-section is schematically shown in FIG. 2, further includes an insulating membrane 44 as another separator. The insulating membrane 44 is sandwiched between the first composite layer 41 and the second composite layer 42. Other than having the insulating membrane 44 interposed, details of the electrode group 1 shown in FIG. 2 are the same as that in FIG. 1. In FIG. 2, the first principal surface of the first composite layer 41 and the second principal surface of the second composite layer 42 are in contact with the insulating membrane 44, but not directly in contact with each other. For this reason, the peel strength σₛ between the principal surfaces is deemed to be zero.

The peel strength σₙ at the interface In between the first composite layer 41 and the negative electrode active material-containing layer 3b is preferably greater than 0.3 N/mm. The peel strength σₚ at the interface Iₚ between the second composite layer 42 and the positive electrode active material-containing layer 5b is preferably greater than 0.3 N/mm.

A thickness tₙ of the first composite layer 41 may correspond to a distance from the interface Iₙ to the interface Iₛ, or a distance from the interface Iₙ to the insulating membrane 44. Similarly, a thickness tₚ of the second composite layer 42 may correspond to a distance from the interface Iₚ to the interface Iₛ, or a distance from the interface Iₚ to the insulating membrane 44.

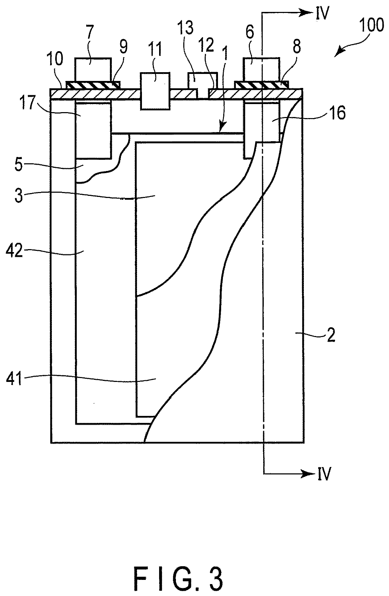

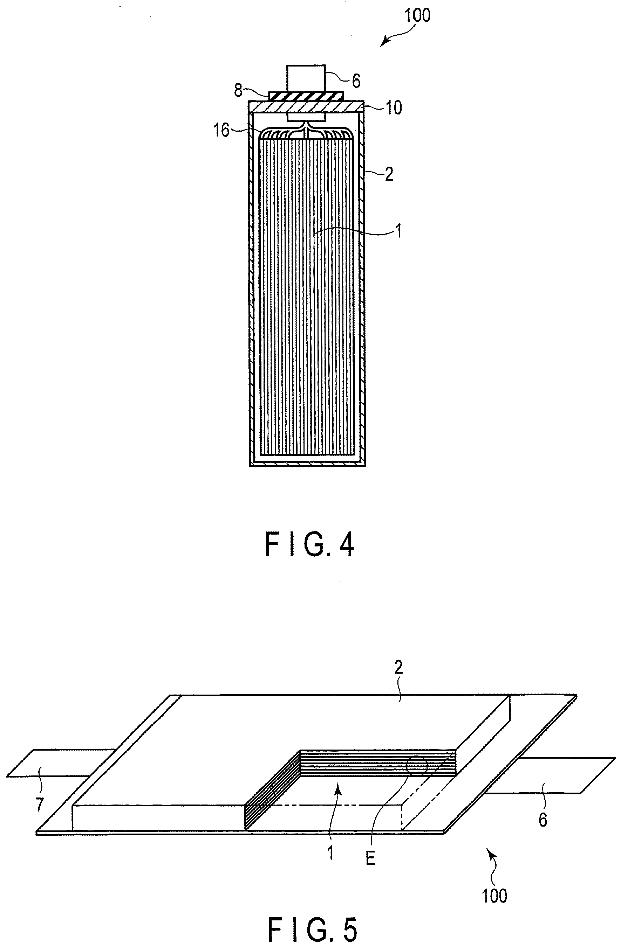

Examples of the secondary battery according to the approach will be described below with reference to the drawings . FIG. 3 is a cross-sectional view schematically showing an example of the secondary battery according to the approach. FIG. 4 is a cross-sectional view of the secondary battery shown in FIG. 3 taken along a line IV - IV.

An electrode group 1 is housed in a container member 2 made of a rectangular tubular metal container. The electrode group 1 includes a negative electrode 3, a positive electrode 5, a first composite layer 41, and a second composite layer 42. The first composite layer 41 and the second composite layer 42 are respectively joined onto principal surfaces of the negative electrode 3 and the positive electrode 5. The electrode group 1 has a structure formed by having the first composite layer 41 and second composite layer 42 as a separator interposed between the positive electrode 3 and the negative electrode 3, and spirally wound so as to form a flat shape. An aqueous electrolyte (not shown) is held in the electrode group 1. As shown in FIG. 3, a strip-shaped negative electrode lead 16 is electrically connected to each of plural portions at an end of the negative electrode 5 located on an end face of the electrode group 1. In addition, a strip-shaped positive electrode lead 17 is electrically connected to each of plural portions at an end of the positive electrode 5 located on the end face. The plural negative electrode leads 16 are electrically connected to a negative electrode terminal 6 in a bundled state, as shown in FIG. 4. In addition, the plural positive electrode leads 17 are similarly electrically connected to a positive electrode terminal 7 in a bundled state, although not shown.

A sealing plate 10 made of metal is fixed to the opening portion of the container member 2 made of metal by welding or the like. The negative electrode terminal 6 and the positive electrode terminal 7 are extracted to the outside from outlet holes provided in the sealing plate 10, respectively. On the inner surfaces of the outlet holes of the sealing plate 10, a negative electrode gasket 8 and a positive electrode gasket 9 are arranged to avoid a short circuit caused by contact respective with the negative electrode terminal 6 and the positive electrode terminal 7. By providing the negative electrode gasket 8 and the positive electrode gasket 9, the airtightness of the secondary battery 100 can be maintained.

A control valve 11 (safety valve) is provided on the sealing plate 10. When the internal pressure of the battery cell is raised by gas generated by electrolysis of the aqueous solvent, the generated gas can be released from the control valve 11 to the outside. As the control valve 11 there may be used, for example, a return type valve that operates when the internal pressure exceeds a predetermined value and functions as a sealing plug when the internal pressure lowers.
Alternatively, there may be used a non-return type valve that cannot recover the function as a sealing plug once it operates. In FIG. 3, the control valve 11 is disposed at the center of the sealing plate 10. However, the position of the control valve 11 may be an end of the sealing plate 10. The control valve 11 may be omitted.

Additionally, an inlet 12 is provided on the sealing plate 10. The aqueous electrolyte may be put in via the inlet 12. The inlet 12 may be closed with a sealing plug 13 after the aqueous electrolyte is put in. The inlet 12 and the sealing plug 13 may be omitted.

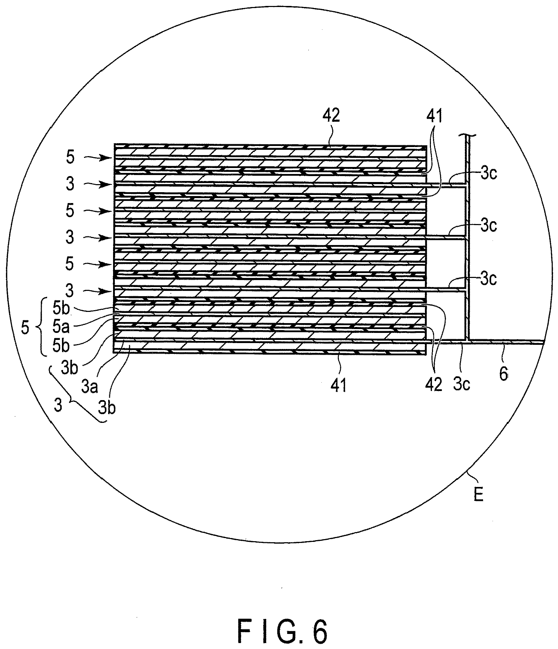

FIG. 5 is a partially cut out perspective view schematically showing another example of the secondary battery according to the approach. FIG. 6 is an enlarged sectional view of section E of the secondary battery shown in FIG. 5. FIG 5 and FIG 6 show an example of the secondary battery 100 using a laminated film container member as a container member.

The secondary battery 100 shown in FIGS. 5 and 6 includes an electrode group 1 shown in FIGS. 5 and 6, a container member 2 shown in FIG. 5, and an aqueous electrolyte, which is not shown. The electrode group 1 and the aqueous electrolyte are housed in the container member 2. The aqueous electrolyte is held in the electrode group 1.

The container member 2 is made of a laminated film including two resin layers and a metal layer sandwiched between the resin layers.

As shown in FIG. 6, the electrode group 1 is a stacked electrode group. The stacked electrode group 1 has a structure in which negative electrodes 3 having first composite layers 41 joined to both faces and positive electrodes 5 having second composite layers 42 joined to both faces are alternately stacked.

The electrode group 1 includes plural negative electrodes 3. Each of the plural negative electrodes 3 includes a negative electrode current collector 3a and negative electrode active material-containing layers 3b arranged on both surfaces of the negative electrode current collector 3a. First composite layers 41 are further supported on top of the negative electrode active material-containing layers 3b on each surface. The electrode group 1 includes plural positive electrodes 5. Each of the positive electrodes 5 includes a positive electrode current collector 5a and positive electrode active material-containing layers 5b supported on both surfaces of the positive electrode current collector 5a. Second composite layers 42 are further supported on top of the positive electrode active, material-containing layers 5b on each surface.

The negative electrode current collector 3a of each of the negative electrodes 3 includes at one end, a portion where the negative electrode active material-containing layer 3b is not provided on any surface. The portion serves as a negative electrode current collecting tab 3c. As shown in FIG. 6, the negative electrode current collecting tab 3c does not overlap the positive electrode 5. Plural negative electrode current collecting tabs 3c are electrically connected to a belt-shaped negative electrode terminal 6. A leading end of the belt-shaped negative electrode terminal 6 is drawn to the outside from the container member 2.

Although not shown, the positive electrode current collector 5a of each of the positive electrodes 5 includes at one end a portion where the positive electrode active material-containing layer 5b is not supported on any surface. This portion serves as a positive electrode current collecting tab. Like the negative electrode current collecting tab 3c, the positive electrode current collecting tab does not overlap the negative electrode 3. Further, the positive electrode current collecting tab is located on the opposite side of the electrode group 1 with respect to the negative electrode current collecting tab 3c. The positive electrode current collecting tab is electrically connected to a belt-shaped positive electrode terminal 7. A leading end of the belt-shaped positive electrode terminal 7 is located on the opposite side of the negative electrode terminal 6 and drawn to the outside from the container member 2.

### <Production Method>

Next, a method of producing the electrode group included in the secondary battery according to the approach will be described. In summary, the method of producing the electrode group includes preparing a negative electrode and a positive electrode, forming a first composite layer and a second composite layer by applying a slurry for composite layer formation respectively onto surfaces of the negative electrode and the positive electrode, and fabricating an electrode group using the negative electrode on which the first composite layer was formed and the positive electrode on which the second composite layer was formed.

The negative electrode can be obtained by, for example, the following method. First, the negative electrode active material, electro-conductive agent, and binder are suspended in an appropriate solvent to prepare a slurry. The slurry is applied onto one surface or both surfaces of the negative electrode current collector. The coating film on the negative electrode current collector is dried, thereby forming an active material-containing layer. In order to control the densities of the negative electrode active material-containing layer and the first composite layer formed later, pressing may be performed prior to forming the first composite layer.

The positive electrode can be obtained by, for example, the following method. First, the positive electrode active material, electro-conductive agent, and binder are suspended in an appropriate solvent to prepare a slurry. The slurry is applied onto one surface or both surfaces of the positive electrode current collector. The coating film on the positive electrode current collector is dried, thereby forming an active material-containing layer. After that, pressing is performed on the positive electrode current collector and the positive electrode active material-containing layer formed thereon.

The composite layer is formed onto the positive and negative electrodes, for example, as follows.

A slurry for forming the composite layer is prepared. The slurry for composite layer formation is obtained by stirring a mixture obtained by mixing inorganic solid particles, a polymeric material, and a solvent.

As the solvent, a solvent capable of dissolving a polymeric material is preferably used. Examples of the solvent include alcohols such as ethanol, methanol, isopropyl alcohol, normal propyl alcohol and benzyl alcohol; ketones such as acetone, methyl ethyl ketone, methyl isobutyl ketone, cyclohexanone and diacetone alcohol; esters such as ethyl acetate, methyl acetate, butyl acetate, ethyl lactate, methyl lactate and butyl lactate; ethers such as methyl Cellosolve, ethyl Cellosolve, butyl Cellosolve, 1,4-dioxane and tetrahydrofuran; glycols such as ethylene glycol monoethyl ether acetate, propylene glycol monomethyl ether acetate, butyl carbitol acetate, and ethyl carbitol acetate; glycol ethers such as methyl carbitol, ethyl carbitol, and butyl carbitol; aprotic polar solvents such as dimethylformamide, dimethylacetamide, acetonitrile, valeronitrile, N-methyl-2-pyrrolidone, N-ethyl-2-pyrrolidone and γ-butyrolactam; cyclic carboxylate esters such as gamma-butyrolactone, gamma-valerolactone, gamma-caprolactone and epsilon-caprolactone; and linear carbonate compounds such as dimethyl carbonate, diethyl carbonate, di-n-propyl carbonate, diisopropyl carbonate, n-propyl isopropyl carbonate, ethyl methyl carbonate, and methyl n-propyl carbonate.

The slurry for composite layer formation is applied onto, for example, one principal surface of the active material-containing layer of the negative electrode or the positive electrode by, for example, a doctor blade method to obtain a coating film. Alternatively, the slurry for composite layer formation may be applied onto principal surfaces on both of reverse surfaces of the active material-containing layer of the negative electrode or positive electrode, to obtain a coating film on each principal surface. The slurries for composite layer formation applied onto each of the principal surfaces may have the same composition, or compositions that are different with respect of each other. Moreover, the slurry applied onto the negative electrode and the slurry applied onto the positive electrode may have the same composition or may respectively have different compositions. The coating film(s) is dried at a temperature of 50°C or more and 150°C or less. In this manner, obtained is a stack where the dried coating film(s) is formed on the active material-containing layer(s) on one face or both faces of the electrode.

Next, this stack is subjected to a roll-press treatment. Upon the roll-press treatment, for example, a press apparatus equipped with two rollers on upper and lower portions is used. By using such a press apparatus, in the case that coating films are disposed on both faces of the electrode, both coating films can simultaneously be subjected to pressing. At this time, the heating temperature of the roller can be appropriately varied depending on the desired structure. For instance, the heating temperature of the roller is set to a temperature within ± 20°C of the softening point of the polymeric material in the coating film. By subjecting the coating film to the roll-press treatment at a temperature close to the softening point of the polymeric material, only the polymeric material located on the surface side of the coating film is heated and softened. In addition, due to the coating film being pressurized, the polymeric material located on the binding surface side of the coating film may become extruded to the surface side. Hence, the softened polymeric material is disposed so as to fill gaps between the inorganic solid particles on the surface side of the coating film, whereby the denseness is enhanced as compared with that on the inner side of the coating film. In this manner, a first composite layer of which the denseness on the surface side is different from that on the inner side (joining surface side) can be obtained. In contrast, by performing the roll-press treatment on the coating film at 25°C room temperature, there can be obtained composite layer(s) whose denseness is uniform along a thickness direction of the coating film. The heating temperature of the roller is preferably lower than the melting point of the polymeric material. When the heating temperature is increased to the melting point of the polymeric material or higher, the polymeric material may melt on the surface side of the coating film, whereby the voids may be completely lost. Complete loss of the voids is undesirably since the ion conductivity of the composite layer diminishes.

The softening point and melting point of the polymeric material may vary depending on the molecular weight and the unit ratio of monomer. According to an example, the softening point of PVdF is 135°C to 145°C and the melting point thereof is 170°C to 180°C. The softening point of polyvinyl formal is 120°C to 130°C and the melting point thereof is 190°C to 200°C. The softening point of polyvinyl butyral is 120°C to 130°C and the melting point thereof is 190°C to 200°C.

Alternatively, a composite layer of which the denseness on the surface side is different from that on the inner side may be provided by applying two kinds of slurries so as to form a two-layer structure. In other words, for example, a slurry having a high proportion of inorganic solid particles and a low proportion of polymeric material is prepared as a slurry for forming a lower layer, which is located on the joining surface side of the composite layer and exhibits low denseness . This slurry for lower layer formation is applied on one electrode principal surface and dried to obtain a coating film. Next, for example, a slurry having a low proportion of inorganic solid particles and a high proportion of polymeric material is prepared as a slurry for forming an upper layer, which is located on the surface side of the composite layer and exhibits high denseness. This slurry for upper layer formation is applied onto the coating film on the electrode principal surface and dried to further provide a coating film. In this manner, a composite layer of which the denseness on the surface side is different from that on the inner side can be obtained regardless of the heating temperature of the roller.

In addition, for each of the electrodes, pressing may be performed ahead of applying the slurry for composite layer formation, then pressing be performed again after drying the slurry coating film, in order to control the density of each of the active material-containing layer(s) and the composite layer(s) .

In the manner described above, a negative electrode supporting first composite layer(s) or a positive electrode supporting second composite layer(s) may be obtained. Note that the above-described press apparatus allows the coating films provided on both surfaces of the electrode to be simultaneously subjected to a roll press treatment, but the coating films may be subjected to the roll press treatment one by one. Even in a case where the coating films are provided on just one surface of the electrode as well, the above-described press apparatus equipped with two rollers on upper and lower portions may be used.

Here, depending on the pressing pressure applied after the coating film of the slurry for composite layer formation is dried, the peel strength σₙ at the joining surface of the first composite layer and the negative electrode as well as the peel strength σₚ at the joining surface of the second composite layer and the positive electrode may vary. For example, lowering the pressing pressure may result in reduction of the peel strengths σₙ and oₚ. Furthermore, depending on the composition of the slurry for composite layer formation, the peel strengths σₙ and σₚ may vary. For example, increasing the proportion of the polymeric material may result in an increase in the peel strengths σₙ and σₚ.

The porosity of the composite layer to be obtained may also vary depending on the slurry composition. For example, increasing the proportion of the polymeric material may result in an increase in the porosity.

In addition, depending on the speed of applying the slurry for composite layer formation, the thicknesses of the first and second composite layers may vary. For example, decreasing the application rate may result in an increase in the thickness tₙ or tₚ of the composite layer.

The obtained first composite layer-supporting negative electrode and second composite layer-supporting positive electrode are stacked in such a manner that the principal surfaces of the first composite layer and the second composite layer face each other. Another separator such as a nonwoven fabric or the like may be sandwiched between the first composite layer and the second composite layer. For example, if a stacked electrode group is fabricated, plural first composite layer-supporting negative electrodes and second composite layer-supporting positive electrodes may be alternately stacked. Alternatively, if a wound electrode group is fabricated, at least one first composite layer-supporting negative electrode and at least one second composite layer-supporting positive electrode may be stacked and then the obtained stack may be spirally wound. After the electrodes are stacked or after they are stacked and further wound, the obtained structure is subjected to pressing. The electrode group can be fabricated in such a manner.

Depending on the pressing pressure, the peel strength σₛ between the first composite layer and the second composite layer may vary. For example, if the pressing pressure is set high, the peel strength σₛ may increase.

The electrode group according to the approach can be obtained by the procedure described above. Using the obtained electrode group and aqueous electrolyte prepared separately, the secondary battery according to the approach can be assembled.

### <Measurement Method>

Various measurement methods will be described. Specifically, a description will be given of the methods of measuring the peel strength between the members in the electrode group, the porosity of the composite layer, and the pH of the aqueous electrolyte.

### (Measurement Method of Peel Strength)

In the electrode group, the peel strengths (σₛ, σₙ, σₚ) can be measured by the surface/interface cutting method. Details follow.

The secondary battery is discharged and then disassembled to take out the electrode group. Before measurement, an outer surface of the electrode group is washed with pure water, and then the electrode group is immersed in pure water and left to stand for 48 hours or longer. Thereafter, the electrode group is further washed with pure water and dried in a vacuum drying furnace at 100°C for 48 hours or longer, thereby preparing a measurement sample of the electrode group.

The measurement of the peeling strength according to the surface/interface cutting method may be performed by using a cutting strength measurement device such as a surface and interfacial cutting analysis system (SAICAS) (registered trademark). The surface/interface cutting method may also be referred to as the SAICAS method. As a measurement device, for example, DN-GS from DAYPLA WINTES CO., LTD., may be used. As a cutting knife, for example, a ceramic knife made of borazon and having a knife width of 1.0 mm is used. As measurement conditions, for example, a knife angle is set to a rake angle of 20 degrees and a clearance angle of 10 degrees.

First, cutting in the vertical direction is performed, with pressing load of 1N (constant load mode), on one of the members forming the interface whose peel strength is measured in the sample. Here, if the peel strength σₛ between the first composite layer and the second composite layer is measured, for example, the member to be cut may be either the first composite layer or the second composite layer. If the peel strength σₙ between the first composite layer and the negative electrode is measured, for example, the member to be cut may be either the first composite layer or the negative electrode active material-containing layer. If the peel strength σₚ between the second composite layer and the positive electrode is measured, for example, the member to be cut may be either the second composite layer or the positive electrode active material-containing layer.

Cutting is performed at a shear angle of 45 degrees at a constant speed with a horizontal velocity of 2 µm/second and a vertical velocity of 0.2 µm/second. Since a load in a horizontal direction (horizontal force) applied to the knife is lowered upon dislodging of the member being cut at the interface when the knife reaches the interface to be measured, the load in a vertical direction is controlled to be 0.5 N at that point, such that a position of the knife in the vertical direction is maintained constant. Then, the horizontal force (load in the horizontal direction) is measured at a horizontal velocity of 2 µm/second. After the horizontal force associated with dislodging becomes constant, measurement is continued over a region spanning a 0.5 mm length, and the average strength of the horizontal force measured in this region of length is taken as a peeling strength at that interface.

The peel strength between the members in the electrode group is measured by the above-described method to obtain the peel strength σₛ between the first composite layer and the second composite layer, the peel strength σₙ between the first composite layer and the negative electrode, and the peel strength σₚ between the second composite layer and the positive electrode. As described above, if the first composite layer and the second composite layer are joined via another separator made of a nonwoven fabric or resin film, a value of the peel strength σₛ between the first composite layer and the second composite layer is deemed to be zero, but the peel strength between the first composite layer and the other separator or the peel strength between the second composite layer and the other separator may be measured, as well. As a matter of course, also in a case where the first composite layer and the second composite layer are disposed apart without being in contact with each other, a value of the peel strength σₛ between them is deemed to be zero.

Due to the characteristics of the surface/interface cutting method, a value exceeding zero may be observed at an interface where the surfaces are not joined or bound. Even in a case where the measurement value is not zero, if the value of the peel strength σₛ is 0.1 N/mm or less, the surfaces forming the interface are determined as not being joined or bound.

### (Measurement Method of Porosity of Composite Layer and Porosity of Active Material-Containing Layer)

The porosity of each of the first composite layer and the second composite layer is measured through a cross-sectional observation with a scanning electron microscope (SEM). The porosity of the active material-containing layer of each of the negative electrode and the positive electrode can be also measured through layer SEM observation. Details follow.

The secondary battery is discharged and then disassembled to take out the electrode group. Before measurement, each surface of the electrode group is washed with pure water, and then the electrode group is immersed in pure water and left to stand for 48 hours or longer. Thereafter, each surface is further washed with pure water and dried in a vacuum drying furnace at 100°C for 48 hours or longer. Next, cross-section polishing through ion milling is performed to obtain a cross section of the composite layer to be measured. The SEM observation is performed on the cross-section polished surface at 5000 times to obtain a SEM image displayed with 1280×960 pixels. The SEM image is converted into monochrome 256 gradations, and binarized by setting a threshold value so that the solid particles and the binder are displayed as white and vacancies are displayed as black. The area of the black pixels indicating the vacancies with respect to the area of the total pixels in the binarized cross-sectional image is obtained as a porosity.

This operation is performed five times in arbitrary regions on the cross-section of the composite layer and the average thereof is taken to calculate a porosity.

Similarly, for the active material-containing layer of each electrode, a binarized SEM image is used, measurement is performed five times in arbitrary regions on the cross-section of the active material-containing layer, and the average thereof is taken to calculate a porosity.

### (Measurement Method of pH of Aqueous Electrolyte)

The method of measuring pH of the aqueous electrolyte is as follows.

The electrolyte is extracted from the secondary battery having been discharged and the container member opened, or the electrolyte contained in the electrode group taken out by disassembling the secondary battery is extracted. After the amount of the extracted electrolyte is measured, a pH value is measured using a pH meter. Measurement of pH value is performed, for example, as follows. The measurement is performed using, for example, F-74 manufactured by HORIBA, Ltd. in an environment of 25±2°C. First, reference solutions of pH 4.0, 7.0 and 9.0 are prepared. Next, using these reference solutions, calibration of F-74 is carried out. An appropriate amount of electrolyte (electrolytic solution) of the measurement target is placed in a container, and pH is measured. After measurement of pH, the sensor unit of F-74 is washed. When another measurement target is measured, the above-described procedure, i.e., calibration, measurement, and washing, is performed each time.

The secondary battery according to the first approach includes the first composite layer on the negative electrode, the second composite layer on the positive electrode, and the aqueous electrolyte including water. The peel strength σₛ between the first principal surface of the first composite layer and the second principal surface of the second composite laye is 0.1 N/mm or less, and thus, the first composite layer and second composite layer are not joined. The secondary battery can exhibit high charge-discharge efficiency and high life performance.

### Second Approach

According to a second approach, a battery module is provided. The battery module includes plural of secondary batteries according to the first approach.

In the battery module, each of the single-batteries may be arranged to be electrically connected in series or in parallel, or may be arranged in combination of in-series connection and in-parallel connection.

An example of the battery module will be described next with reference to the drawings.

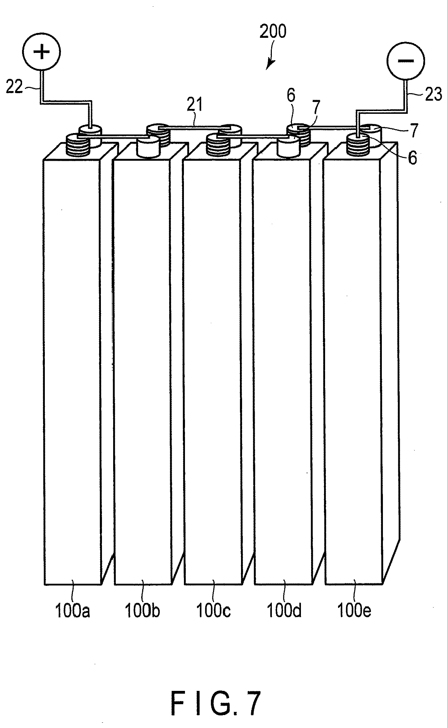

FIG. 7 is a perspective view schematically showing an example of the battery module. The battery module 200 shown in FIG. 7 includes five single-batteries 100a to 100e, four bus bars 21, a positive electrode-side lead 22, and a negative electrode-side lead 23. Each of the five single-batteries 100a to 100e is the secondary battery according to the first approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the approach includes a secondary battery according to an approach. Therefore, the battery module can exhibit high charge-discharge efficiency and high life performance.

### Third Approach

According to a third approach, provided is a battery pack including the secondary battery according to the first approach. The battery pack may include a battery module according to the second approach. The battery pack may include a single secondary battery according to the first approach, in place of the battery module according to the second approach.

The battery pack may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack may further include an external power distribution terminal. The external power distribution terminal is configured to externally output electric current from the secondary battery, and/or to input external electric current into the secondary battery. In other words, when the battery pack is used as a power source, electric current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

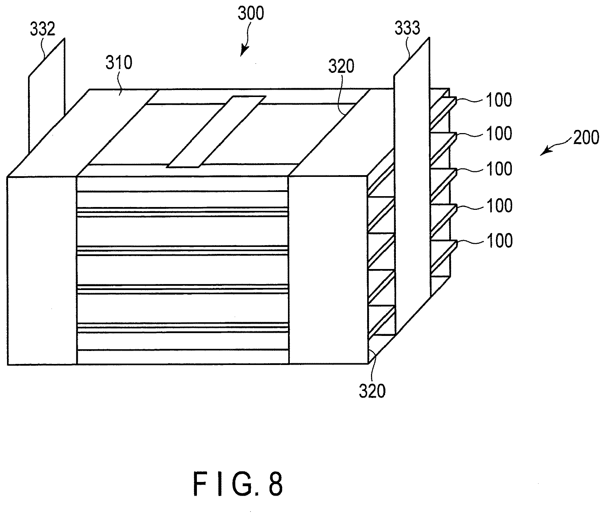

FIG. 8 is a perspective view schematically showing an example of the battery pack according to the approach.

A battery pack 300 includes a battery module configured of the secondary battery shown in FIGS. 5 and 6. The battery pack 300 includes a housing 310, and a battery module 200 housed in the housing 310. In the battery module 200, plural (for example, five) secondary batteries 100 are electrically connected in series. The secondary batteries 100 are stacked in a thickness direction. The housing 310 has an opening 320 on each of an upper portion and four side surfaces. The side surfaces, from which the positive and negative electrode terminals 6 and 7 of the secondary batteries 100 protrude, are exposed through the opening 320 of the housing 310. A positive electrode terminal 332 for output of the battery module 200 is belt-shaped, and one end thereof is electrically connected to any or all of the positive electrode terminals 7 of the secondary batteries 100, while the other end protrudes beyond the opening 320 of the housing 310 and thus protrudes past the upper portion of the housing 310. Meanwhile, a negative electrode terminal 333 for output of the battery module 200 is belt-shaped, and one end thereof is electrically connected to any or all of the negative electrode terminals 6 of the secondary batteries 100, while the other end protrudes beyond the opening 320 of the housing 310 and thus protrudes past the upper portion of the housing 310.

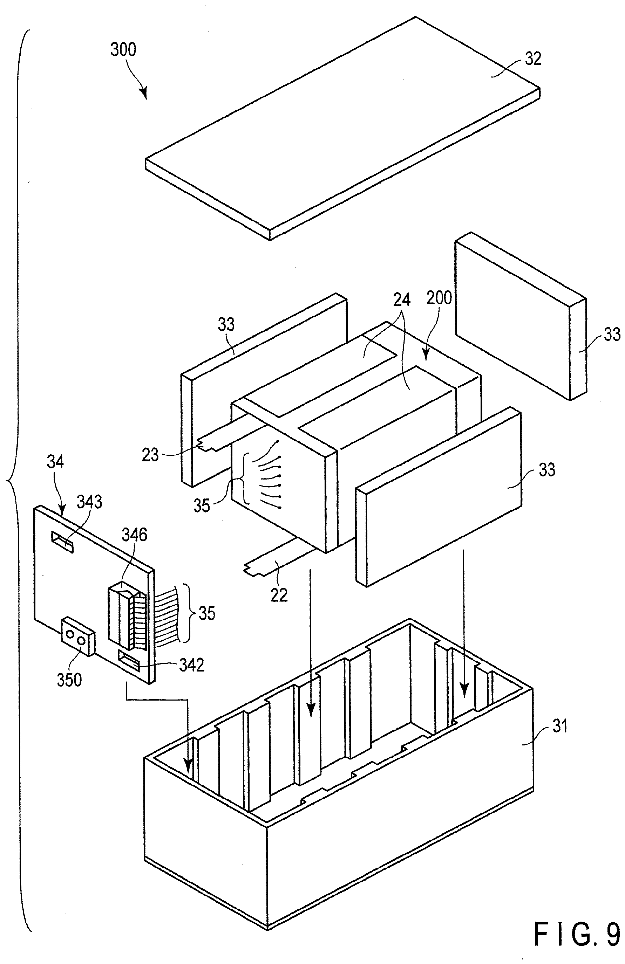

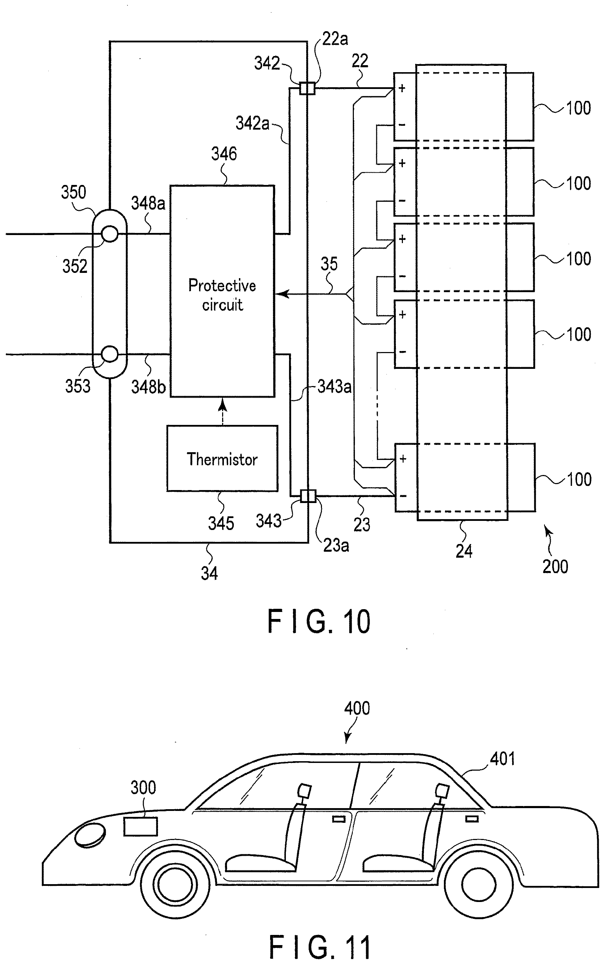

Another example of the battery pack is explained in detail with reference to FIG. 9 and FIG 10. FIG. 9 is an exploded perspective view schematically showing another example of the battery pack according to the approach. FIG. 10 is a block diagram showing an example of an electric circuit of the battery pack shown in FIG. 9.

A battery pack 300 shown in FIGS. 9 and 10 includes a housing container 31, a lid 32, protective sheets 33, a battery module 200, a printed wiring board 34, wires 35, and an insulating plate (not shown).

The housing container 31 shown in FIG. 9 is a square-bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tape(s) 24.

At least one of the plural single-batteries 100 is a secondary battery according to the approach. The plural single-batteries 100 are electrically connected in series, as shown in FIG. 10. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape(s) 24 fastens the plural single-batteries 100. The plural single-batteries 100 may be fixed using a heat shrinkable tape in place of the adhesive tape(s) 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200 . The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces one side surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery (s) 100. When detecting over charge or the like for each of the single-batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output electric current from the battery module 200 to an external device and input electric current from an external device to the battery module 200 via the external power distribution terminal 350. In other words, when using the battery pack 300 as a power source, the electric current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal and negative-side terminal of the external power distribution terminal.

Such a battery pack 300 is used, for example, in applications where excellent cycle performance is demanded when a large current is extracted. More specifically, the battery pack 300 is used as, for example, a power source for electronic devices, a stationary battery, or an onboard battery for various kinds of vehicles. An example of the electronic device is a digital camera. The battery pack 300 is particularly favorably used as an onboard battery.

The battery pack according to the third approach is provided with the secondary battery according to the first approach or the battery module according to the second approach. Accordingly, the battery pack can exhibit high charge-discharge efficiency and high life performance.

### Fourth Approach

According to a fourth approach, provided is a vehicle including the battery pack according to the third approach.

In the vehicle, the battery pack is configured, for example, to recover regenerative energy from motive force of the vehicle. The vehicle may include a mechanism (e.g., a regenerator) for converting kinetic energy of the vehicle into regenerative energy.

Examples of the vehicle according to the approach include two- to four-wheeled hybrid electric automobiles, two- to four-wheeled electric automobiles, power assisted bicycles, and railway cars.

In the vehicle according to the approach, the installing position of the battery pack is not particularly limited. For example, the battery pack may be installed in the engine compartment of the vehicle, in rear parts of the vehicle, or under seats.

The vehicle according to the approach may have plural battery packs installed thereon. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

Next, an example of the vehicle according to the approach will be described with reference to the drawings.

FIG. 11 is a partially see-through diagram schematically showing an example of a vehicle according to the approach.

The vehicle 400 shown in FIG. 11 includes a vehicle body 401 and a battery pack 300 according to the third approach. In the example shown in FIG. 11, the vehicle 400 is a four-wheeled automobile.

This vehicle 400 may have plural battery packs 300 installed. In such a case, the batteries (single-batteries or battery modules) included in the battery packs 300 may be connected in series, connected in parallel, or connected in a combination of in-series connection and in-parallel connection.

In FIG. 11, the battery pack 300 is installed in an engine compartment located at the front of the vehicle body 401. As described above, the battery pack 300 may be installed in rear sections of the vehicle body 401, or under a seat. The battery pack 300 may be used as a power source of the vehicle 400. In addition, the battery pack 300 can recover regenerative energy of a motive force of the vehicle 400.

The vehicle according to the fourth approach has the battery pack according to the third approach installed therein. Therefore, the vehicle is excellent in drive performance and reliability.

### Fifth Approach

According to a fifth approach, provided is a stationary power supply including the battery pack according to the third approach.

The stationary power supply may have the battery module according to the second approach or the secondary battery according to the first approach installed therein, instead of the battery pack according to the third approach. The stationary power supply can exhibit high efficiency and long life.

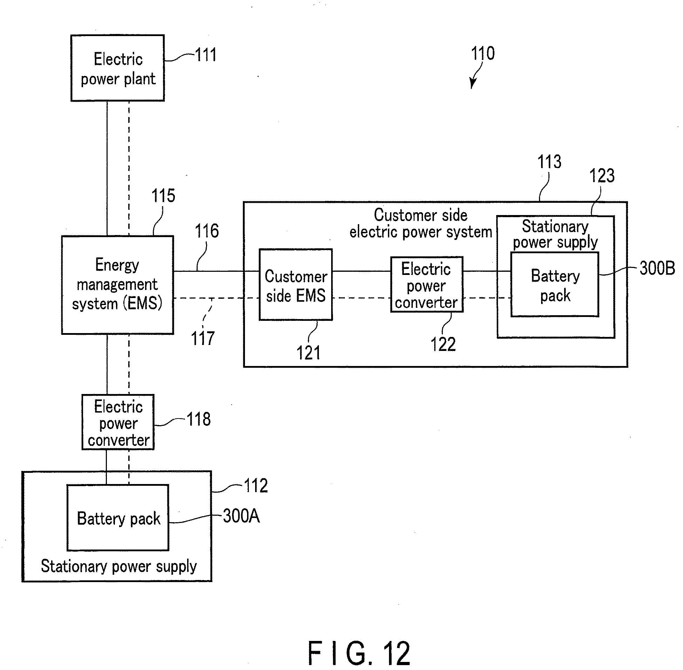

FIG. 12 is a block diagram showing an example of a system including the stationary power supply according to the approach. FIG. 12 is a diagram showing an application example to stationary power supplies 112, 123 as an example of use of battery packs 300A, 300B according to an approach. In the example shown in FIG. 12, shown is a system 110 in which the stationary power supplies 112, 123 are used. The system 110 includes an electric power plant 111, the stationary power supply 112, a customer side electric power system 113, and an energy management system (EMS) 115. Also, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large capacity of electric power from fuel sources such as thermal power or nuclear power. Electric power is supplied from the electric power plant 111 through the electric power network 116 and the like. In addition, the battery pack 300A is installed in the stationary power supply 112. The battery pack 300A can store electric power and the like supplied from the electric power plant 111. In addition, the stationary power supply 112 can supply the electric power stored in the battery pack 300A through the electric power network 116 and the like. The system 110 is provided with an electric power converter 118. The electric power converter 118 includes a converter, an inverter, a transformer and the like. Thus, the electric power converter 118 can perform conversion between direct current (DC) and alternate current (AC), conversion between alternate currents of frequencies different from each other, voltage transformation (step-up and step-down) and the like. Therefore, the electric power converter 118 can convert electric power from the electric power plant 111 into electric power that can be stored in the battery pack 300A.

The customer side electric power system 113 includes an electric power system for factories, an electric power system for buildings, an electric power system for home use and the like. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of frequencies different from each other, voltage transformation (step-up and step-down) and the like. Therefore, the electric power converter 122 can convert electric power supplied to the customer side electric power system 113 into electric power that can be stored in the battery pack 300B.

Note that the electric power stored in the battery pack 300B can be used, for example, for charging a vehicle such as an electric automobile. Also, the system 110 may be provided with a natural energy source . In such a case, the natural energy source generates electric power by natural energy such as wind power and solar light. In addition to the electric power plant 111, electric power is also supplied from the natural energy source through the electric power network 116.

### EXAMPLES

Hereinafter, Examples will be described in detail.

### (Example 1)

### <Fabrication of Negative Electrode>

A negative electrode was fabricated in the following manner. A negative electrode active material, electro-conductive agent, and binder were dispersed in N-methyl-2-pyrrolidone (NMP) solvent, thereby preparing a negative electrode active material-containing slurry. The proportions of the electro-conductive agent and the binder in the negative electrode active material-containing layer were 5 parts by mass and 1 part by mass, respectively, with respect to 100 parts by mass of the negative electrode active material. As the negative electrode active material, lithium titanium oxide Li₄Ti₅O₁₂ powder (LTO) was used. As the electro-conductive agent, graphite powder was used. As the binder, polyvinylidene fluoride (PVdF) resin was used.

Next, the prepared slurry was applied onto both surfaces of a negative electrode current collector and the applied coat was dried, thereby forming the negative electrode active material-containing layer. As the negative electrode current collector, Zn foil having a thickness of 50 µm was used. Here, when the slurry was applied onto the Zn foil, of the negative electrode being fabricated, in the part to be located at the outermost layer of the negative electrode to be prepared, the negative electrode active material-containing slurry was applied to only one surface of the Zn foil, and in other parts, the negative electrode active material-containing slurry was applied onto both surfaces of the Zn foil. At this time, the negative electrode active material-containing slurry drying temperature was 130°C, and the slurry application rate was 1 m/min.

Next, inorganic solid particles and polymeric material were mixed with N-methyl-2-pyrrolidone (NMP) to obtain a slurry for composite layer formation. As the inorganic solid particles, LATP (Li_{1.5}Al_{0.5}Ti_{1.5} (PO₄)₃) particles having Li conductivity were used, and as the polymeric material, polyvinylidene fluoride (PVdF) resin was used. In the composite layer slurry, the mass ratio of the inorganic solid particles to the polymeric material was set to 80:20. This composite layer slurry was applied onto the surface of the negative electrode active material-containing layer at an application rate of 1.0 m/min, and the obtained applied coat was dried at a temperature of 130°C, thereby forming the composite layer (first composite layer) on the negative electrode active material-containing layer, and this stack was pressed at 5 kN, thereby obtaining the negative electrode supporting the composite layer.

### <Fabrication of Positive Electrode>

A positive electrode active material, electro-conductive agent, binder, and solvent were mixed together to prepare a slurry for positive electrode fabrication. As the positive electrode active material, lithium manganese oxide LiMn₂O₄ (LMO) was used. As the electro-conductive agent, graphite powder was used. As the binder, polyvinylidene fluoride (PVdF) was used. As the solvent, N-methyl-2-pyrrolidone (NMP) was used. The mass ratio of the positive electrode active material, electro-conductive agent, and binder in the slurry was set to 100:5:5. The slurry for positive electrode formation was applied onto both surfaces of a Ti foil having a thickness of 12 µm used as the positive electrode current collector, and dried. At this time, the positive electrode active material-containing slurry drying temperature was 130°C, and the slurry application rate was 1 m/min.

Next, the composite layer (second composite layer) similar to the composite layer (first composite layer) of the negative electrode was formed, and this stack was pressed at 5 kN, thereby obtaining the positive electrode supporting the composite layer.

### <Fabrication of Electrode Group>

The negative electrode supporting the composite layer and the positive electrode supporting the composite layer were stacked to obtain a stack. The stack was spirally wound so that the negative electrode side was positioned at the outermost periphery, and then pressed at 5 kN, thereby fabricating a flat electrode group.

### <Assembly of Battery>

The obtained electrode group was housed in a resin container made of polypropylene. Next, 12M LiCl aqueous solution prepared as an aqueous electrolyte was poured into the container, thereby fabricating the secondary battery.

### (Example 2)

The secondary battery was fabricated according to the same procedure as in Example 1 except that the application rates when applying the composite layer slurry onto the negative electrode and positive electrode surfaces were changed to 0.5 m/min.

### (Example 3)

The secondary battery was fabricated according to the same procedure as in Example 1 except that the application rates when applying the composite layer slurry onto the negative electrode and positive electrode surfaces was changed to 2.5 m/min.

### (Example 4)

The secondary battery was fabricated according to the same procedure as in Example 1 except that the composition of the composite layers formed onto the negative electrode and positive electrode surfaces was changed to LATP:PVdF = 85:15 (mass ratio).

### (Example 5)

The secondary battery was fabricated according to the same procedure as in Example 1 except that the application rate when applying the composite layer slurry onto the negative electrode surface was changed to 2.0 m/min.

### (Example 6)

The secondary battery was fabricated according to the same procedure as in Example 1 except that the application rate when applying the composite layer slurry onto the positive electrode surface was changed to 2.0 m/min.

### (Example 7)

The secondary battery was fabricated according to the same procedure as in Example 1 except that the application rate when applying the composite layer slurry onto the positive electrode surface was changed to 0.4 m/min.

### (Example 8)

The secondary battery was fabricated according to the same procedure as in Example 1 except that the application rate when applying the composite layer slurry onto the negative electrode surface was changed to 0.4 m/min.

### (Example 9)

The secondary battery was fabricated according to the same procedure as in Example 1 except that the composition of the composite layer formed on the positive electrode surface was changed to LATP:PVdF = 95:5 (mass ratio).

### (Example 10)

The secondary battery was fabricated according to the same procedure as in Example 1 except that the composition of the composite layer formed on the negative electrode surface was changed to LATP:PVdF = 95:5 (mass ratio).

### (Example 11)

In fabrication of the negative electrode, the negative electrode active material-containing slurry was applied and dried as in Example 1, and then the negative electrode active material-containing layer formed on the current collector was pressed at 5 kN. Subsequently, the composite layer similar to that in Example 1 was formed, and the stack was pressed at 2 kN, thereby obtaining the negative electrode supporting the composite layer. Other than the above, the secondary battery was fabricated according to the same procedure as in Example 1.

### (Example 12)

In fabrication of the positive electrode, the positive electrode active material-containing slurry was applied and dried as in Example 1, and then the positive electrode active material-containing layer formed on the current collector was pressed at 5 kN. Subsequently, the composite layer similar to that in Example 1 was formed, and the stack was pressed at 2 kN, thereby obtaining the positive electrode supporting the composite layer. Other than the above, the secondary battery was fabricated according to the same procedure as in Example 1.

### (Example 13)

The secondary battery was fabricated according to the same procedure as in Example 1 except that the electrolyte was changed to an aqueous solution containing 12M of LiCl and 1M of LiOH.

### (Example 14)

The secondary battery was fabricated according to the same procedure as in Example 1 except that the polymeric material used for the composite layers formed on the negative electrode and positive electrode surfaces was changed to polyvinyl butyral (PVB).

### (Example 15)

The secondary battery was fabricated according to the same procedure as in Example 1 except that the polymeric material used for the composite layer formed on the negative electrode surface was changed to PVB.

### (Example 16)

The secondary battery was fabricated according to the same procedure as in Example 1 except that the polymeric material used for the composite layer formed on the positive electrode surface was changed to PVB.

### (Example 17)

The secondary battery was fabricated according to the same procedure as in Example 1 except that the inorganic solid particles used for the composite layers formed on the negative electrode and positive electrode surfaces were changed to alumina (Al₂O₃).

### (Example 18)

The secondary battery was fabricated according to the same procedure as in Example 1 except that the inorganic solid particles used for the composite layer formed on the negative electrode surface were changed to alumina.

### (Example 19)

The secondary battery was fabricated according to the same procedure as in Example 1 except that the inorganic solid particles used for the composite layer formed on the positive electrode surface were changed to alumina.

### (Example 20)

The secondary battery was fabricated according to the same procedure as in Example 1 except that the inorganic solid particles used for the composite layers formed on the negative electrode and positive electrode surfaces were changed to Li₇La₃Zr₂O₁₂ (LLZ) .

### (Example 21)

The secondary battery was fabricated according to the same procedure as in Example 1 except that the inorganic solid particles used for the composite layer formed on the negative electrode surface were changed to LLZ.

### (Example 22)

The secondary battery was fabricated according to the same procedure as in Example 1 except that the solid particles used for the composite layer formed on the positive electrode surface were changed to LLZ.

### (Example 23)

The secondary battery was fabricated according to the same procedure as in Example 1 except that the active material used for the negative electrode was changed to Nb₂TiO₇ (NTO).

### (Example 24)

The secondary battery was fabricated according to the same procedure as in Example 1 except that the active material used for the positive electrode was changed to LiNi_{0.5}Co_{0.2}Mn_{0.3}O₂ (NCM523) .

### (Example 25)

The secondary battery was fabricated according to the same procedure as in Example 1 except that the stack of the same composite layer-supporting negative electrode and composite layer-supporting positive electrode as those in Example 1 was spirally wound so that the negative electrode side was positioned at the outermost periphery, and then pressed at 20 kN to thereby fabricate the flat electrode group.

### (Example 26)

The secondary battery was fabricated according to the same procedure as in Example 1 except that a cellulose-based nonwoven fabric having a thickness of 15 µm was arranged between the first composite layer and the second composite layer in the electrode group using the same first composite layer-supporting negative electrode and second composite layer-supporting positive electrode as those in Example 1.

### (Comparative Example 1)

The secondary battery was fabricated according to the same procedure as in Example 1 except that the formation of the first composite layer onto the negative electrode surface was omitted.

### (Comparative Example 2)

The secondary battery was fabricated according to the same procedure as in Example 1 except that the formation of the second composite layer onto the positive electrode surface was omitted.

### (Comparative Example 3)

The negative electrode including the first composite layer and the positive electrode including the second composite layer were fabricated according to the same procedure as in Example 1. The electrodes having the composite layers were put into a drying furnace at 140°C and laminated at 10 kN. The secondary battery was fabricated according to the same procedure as in Example 1 except that the electrode group fabricated using the obtained stack (laminate) was used instead.

### (Comparative Example 4)

The same negative electrode active material-containing slurry, composite layer slurry, and positive electrode active material-containing slurry as those in Example 1 were prepared. Each slurry was prepared by the same method as that in Example 1. The negative electrode active material-containing layer was formed on the Zn foil having a thickness of 50 µm, and subsequently the composite layer slurry and the positive electrode active material-containing slurry were applied. The Ti foil having a thickness of 12 µm was laminated in the drying furnace while drying the coating film of the positive electrode active material-containing slurry, thereby binding the positive electrode active material-containing layer and the Ti foil. Thereafter, the obtained stack was pressed at 5 kN to thereby obtain a stack. The secondary battery was fabricated according to the same procedure as in Example 1 except that the electrode group fabricated using the obtained stack was used instead.

### <Performance Evaluation of Secondary Battery>

Charge-discharge efficiencies were measured for the secondary batteries according to Examples 1 to 26 and Comparative Examples 1 to 4. Specifically, each secondary battery was first charged at a constant current of 1 A in an environment of 25°C until the battery voltage reached 2.7 V. This state was maintained for 30 minutes. Thereafter, the battery was discharged at a constant current of 1 A until the battery voltage reached 2.1 V. This state was maintained for 30 minutes. This series of operations was taken as one charge and discharge cycle, and was repeated 100 times. For each secondary battery, the discharge capacity and charge capacity of the 100th cycle were measured, and the charge-discharge efficiency (discharge capacity/charge capacity) was calculated using the measured values. Further, the capacity during the 100th cycle with respect to the initial capacity measured upon the first discharge, that is, the capacity retention ratio during the 100 cycles (discharge capacity in 100th cycle/discharge capacity in 1st cycle) was calculated, to thereby determine life performance.

### <Peel Strength Evaluation>

After the charge-discharge efficiency and the life performance were measured as described above, the secondary battery was discharged and disassembled by the method described above, the electrode group was taken out and washed, and the peel strength between each of the members was measured by the surface/interface cutting method. Specifically, for each secondary battery, measurements were performed for the peel strength σₛ between the first composite layer on the negative electrode and the second composite layer on the positive electrode, the peel strength σₙ between the negative electrode and the first composite layer, and the peel strength σₚ between the positive electrode and the second composite layer. Note that in Example 26, however, the cellulose nonwoven fabric serving as a separator was sandwiched between the first composite layer and the second composite layer in addition to these composite layers, and therefore, there was no interface where the first composite layer and the second composite layer were directly in contact with each other. Thus, while the peel strength σₛ between them is deemed to be zero, the peel strength between the nonwoven fabric and the composite layer was measured as well.

As a measurement device, DN-GS from DAYPLA WINTES CO. , LTD. was used. As a cutting knife, a ceramic knife made of borazon and having a knife width of 1.0 mm was used. As measurement conditions, a knife angle had a rake angle of 20 degrees and a clearance angle of 10 degrees.

### <Measurement of Porosity of Composite Layer>

From the electrode group taken out from the secondary battery, the negative electrode and the positive electrode were separated, with the composite layers (if any) kept supported on surfaces thereof. However, in Comparative Example 4, the electrode group was formed in such a manner that the negative electrode and the positive electrode were respectively joined onto the surfaces of the single composite layer, and thus the negative electrode and the positive electrode were not separated. Using samples obtained by applying the treatments from washing to drying to the separated electrodes, the porosity of each composite layer was measured by the method described above.

### <Measurement of pH of Electrolyte>

By the method described above, the secondary battery was discharged and the liquid electrolyte was extracted to measure the pH of the electrolyte.

Tables 1 to 3 summarizes the production conditions and various evaluation results of the secondary batteries of Examples 1-26 and Comparative Examples 1-4.

Tables 1 and 2 respectively show the details of the negative electrode side and the details of the positive electrode side. Specifically, the tables show the composition of the electrode active material, composition of each composite layer, formation condition of each composite layer, thickness and porosity of each composite layer formed, and peel strengths σₛ and σₚ of the composite layer with respect to the electrode. For the composition of the active material, Li₄Ti₅O₁₂ is denoted by "LTO", Nb₂TiO₇ is denoted by "NTO", LiMn₂O₄ is denoted by "LMO", and LiNi_{0.5}Co_{0.2}Mn_{0.3}O₂ is denoted by "NCM523" . For the composition of the composite layer, the material of the inorganic solid particles, the polymeric material, and the mass ratios thereof are shown. For the material of the inorganic solid particles, Li_{1.5}Al_{0.5}Ti_{1.5} (PO₄)₃ is denoted by "LATP", alumina is denoted by "Al₂O₃", and Li₇La₃Zr₂O₁₂ is denoted by "LLZ". For the polymeric material, polyvinylidene fluoride is denoted by "PVdF", and polyvinyl butyral is denoted by "PVB". For the formation conditions of the composite layer, the application rate of the composite layer slurry and the pressing pressure after application are shown. In Comparative Examples 1 and 2, only one of the first composite layer or the second composite layer was included, and therefore, for the composite layer not included, "-" is designated to indicate "not applicable". In Comparative Example 4, although the single composite layer was shared between the negative electrode and the positive electrode, the details of the composite layer of Comparative Example 4 are indicated as the first composite layer, for convenience.

Table 3 shows the details of the electrode group and the battery. Specifically, the table lists the pressing pressure when the electrode group was fabricated, the peel strength σₛ between the first composite layer and the second composite layer, the composition and pH of the electrolyte aqueous solution (discharged state, 25±2°C) , and the results of the performance evaluations of the secondary battery. As the pressing pressure in fabrication of the electrode group, the table lists the pressing pressure when pressing was applied before winding of the stack of each electrode on which the composite layer was formed, and the pressing pressure when pressing was applied after winding. For Examples 1-26 and Comparative Examples 1-2, since no pressing before winding was performed, the pressing pressure is indicated as zero. For Comparative Example 3, since pressing before winding was performed in an environment of 140 °C, the temperature is also shown. For the peel strength σₛ between the first composite layer on the negative electrode side and the second composite layer on the positive electrode side, in Example 26, the nonwoven fabric was sandwiched between the composite layers, and so the peel strength σₛ between the composite layers is deemed to be zero, but the average of the peel strength of the nonwoven fabric with respect to each composite layer is also shown. For Comparative Examples 1, 2 and 4, since only one composite layer was included, a value corresponding to the peel strength σₛ could not be measured, and so, "-" is designated to indicate "not applicable". As for the composition of the electrolyte, the material species and the concentration of the electrolyte salt in the aqueous solution are listed. As the performance evaluations of the secondary battery, the table lists the charge-discharge efficiency in the 100th charge-discharge cycle calculated as described above, the discharge capacity of the 100th cycle, and the life performance evaluated based on the capacity retention ratio during the 100 cycles.

**[Table 1]**

| | Negative Electrode Active Material | Composition of First Composite Layer | | First Composite Layer Forming Conditions | | First Composite Layer Thickness (µm) | First Composite Layer Porosity (%) | Peel Strength On (N/mm) |
|---|---|---|---|---|---|---|---|---|
| | | Inorganic Solid Particle (Mass Ratio) | Polymeric Material (Mass Ratio) | Application Rate (m/min) | Pressing Pressure (kN/m) | | | |
| Example 1 | LTO | LATP (80) | PVdF (20) | 1 | 5 | 30 | 9 | 0.6 |
| Example 2 | LTO | LATP (80) | PVdF (20) | 0.5 | 5 | 50 | 9 | 0.6 |
| Example 3 | LTO | LATP (80) | PVdF (20) | 2.5 | 5 | 10 | 9 | 0.6 |
| Example 4 | LTO | LATP (85) | PVdF (15) | 1 | 5 | 30 | 19 | 0.45 |
| Example 5 | LTO | LATP (80) | PVdF(20) | 2 | 5 | 15 | 8 | 0.6 |
| Example 6 | LTO | LATP (80) | PVdF (20) | 1 | 5 | 30 | 9 | 0.6 |
| Example 7 | LTO | LATP (80) | PVdF (20) | 1 | 5 | 30 | 9 | 0.6 |
| Example 8 | LTO | LATP (80) | PVdF (20) | 0.4 | 5 | 53 | 7 | 0.8 |
| Example 9 | LTO | LATP (80) | PVdF (20) | 1 | 5 | 30 | 9 | 0.6 |
| Example 10 | LTO | LATP (95) | PVdF (5) | 1 | 5 | 28 | 22 | 0.33 |
| Example 11 | LTO | LATP (80) | PVdF (20) | 1 | 2 | 32 | 19 | 0.28 |
| Examole 12 | LTO | LATP (80) | PVdF (20) | 1 | 5 | 29 | 9 | 0.6 |
| Example 13 | LTO | LATP (80) | PVdF (20) | 1 | 5 | 31 | 9 | 0.6 |
| Example 14 | LTO | LATP (80) | PVB (20) | 1 | 5 | 28 | 14 | 0.7 |
| Example 15 | LTO | LATP (80) | PVB (20) | 1 | 5 | 28 | 14 | 0.7 |
| Example 16 | LTO | LATP (80) | PVdF (20) | 1 | 5 | 30 | 9 | 0.5 |
| Example 17 | LTO | Al₂O₃ (80) | PVdF (20) | 1 | 5 | 28 | 10 | 0.6 |
| Example 18 | LTO | Al₂O₃ (80) | PVdF (20) | 1 | 5 | 28 | 10 | 0.6 |
| Example 19 | LTO | LATP (80) | PVdF (20) | 1 | 5 | 30 | 9 | 0.6 |
| Example 20 | LTO | LLZ (80) | PVdF (20) | 1 | 5 | 27 | 8 | 0.6 |
| Example 21 | LTO | LLZ (80) | PVdF (20) | 1 | 5 | 27 | 8 | 0.6 |
| Example 22 | LTO | LATP (80) | PVdF (20) | 1 | 5 | 30 | 9 | 0.6 |
| Example 23 | NTO | LATP (80) | PVdF (20) | 1 | 5 | 25 | 9 | 0.6 |
| Example 24 | LTO | LATP (80) | PVdF (20) | 1 | 5 | 30 | 9 | 0.6 |
| Example 25 | LTO | LATP (80) | PVdF (20) | 1 | 5 | 30 | 8 | 0.7 |
| Example 26 | LTO | LATP (80) | PVdF (20) | 1 | 5 | 30 | 9 | 0.6 |
| Comparative Example 1 | LTO | - | - | - | - | - | - | - |
| Comparative Example 2 | LTO | LATP (80) | PVdF (20) | 1 | 5 | 30 | 9 | 0.6 |
| Comparative Example 3 | LTO | LATP (80) | PVdF (20) | 1 | 5 | 30 | 7 | 0.6 |
| Comparative Example 4 | LTO | LATP (80) | PVdF (20) | 1 | 5 | 55 | 9 | 0.5 |

**[Table 2]**

| | Positive Electrode Active Material | Composition of Second Composite Layer | | Second Composite Layer Forming Conditions | | Second Composite Layer Thickness (µm) | Second Composite Layer Porosity (%) | Peel Strength σₚ (N/mm) |
|---|---|---|---|---|---|---|---|---|
| | | Inorganic Solid Particle (Mass Ratio) | Polymeric Material (Mass Ratio) | Application Rate (m/min) | Pressing Pressure (kN/m) | | | |
| Example 1 | LMO | LATP (80) | PVdF (20) | 1 | 5 | 30 | 9 | 0.55 |
| Example 2 | LMO | LATP (80) | PVdF (20) | 0.5 | 5 | 50 | 9 | 0.55 |
| Example 3 | LMO | LATP (80) | PVdF (20) | 2.5 | 5 | 10 | 9 | 0.5 |
| Example 4 | LMO | LATP (85) | PVdF (15) | 1 | 5 | 30 | 19 | 0.45 |
| Example 5 | LMO | LATP (80) | PVdF (20) | 1 | 5 | 30 | 9 | 0.55 |
| Example 6 | LMO | LATP (80) | PVdF (20) | 2 | 5 | 15 | 8 | 0.55 |
| Example 7 | LMO | LATP (80) | PVdF (20) | 0.4 | 5 | 54 | 8 | 0.6 |
| Example 8 | LMO | LATP (80) | PVdF (20) | 1 | 5 | 30 | 9 | 0.55 |
| Example 9 | LMO | LATP (95) | PVdF (5) | 1 | 5 | 30 | 23 | 0.35 |
| Example 10 | LMO | LATP (80) | PVdF (20) | 1 | 5 | 29 | 9 | 0.55 |
| Example 11 | LMO | LATP (80) | PVdF (20) | 1 | 5 | 31 | 9 | 0.55 |
| Example 12 | LMO | LATP (80) | PVdF (20) | 1 | 2 | 3 0 | 18 | 0.25 |
| Example 13 | LMO | LATP (80) | PVdF (20) | 1 | 5 | 31 | 9 | 0.55 |
| Example 14 | LMO | LATP (80) | PVB (20) | 1 | 5 | 31 | 8 | 0.7 |
| Example 15 | LMO | LATP (80) | PVdF (20) | 1 | 5 | 30 | 9 | 0.55 |
| Example 16 | LMO | LATP (80) | PVB (20) | 1 | 5 | 31 | 8 | 0.7 |
| Example 17 | LMO | Al₂O₃ (80) | PVdF (20) | 1 | 5 | 27 | 10 | 0.55 |
| Example 18 | LMO | LATP (80) | PVdF (20) | 1 | 5 | 30 | 9 | 0.55 |
| Example 19 | LMO | Al₂O₃ (80) | PVdF (20) | 1 | 5 | 27 | 10 | 0.55 |
| Example 20 | LMO | LLZ (80) | PVdF (20) | 1 | 5 | 29 | 8 | 0.55 |
| Example 21 | LMO | LATP (80) | PVdF (20) | 1 | 5 | 30 | 9 | 0.55 |
| Example 22 | LMO | LLZ (80) | PVdF (20) | 1 | 5 | 29 | 8 | 0.55 |
| Example 23 | LMO | LATP (80) | PVdF (20) | 1 | 5 | 30 | 9 | 0.55 |
| Example 24 | NCM523 | LATP (80) | PVdF (20) | 1 | 5 | 31 | 10 | 0.55 |
| Example 25 | LMO | LATP (80) | PVdF (20) | 1 | 5 | 30 | 8 | 0.6 |
| Example 26 | LMO | LATP (80) | PVdF (20) | 1 | 5 | 30 | 9 | 0.55 |
| Comparative Example 1 | LTO | LATP (80) | PVdF (20) | 1 | 5 | 30 | 9 | 0.55 |
| Comparative Example 2 | LTO | - | - | - | - | - | - | - |
| Comparative Example 3 | LTO | LATP (80) | PVdF (20) | 1 | 5 | 30 | 8 | 0.6 |
| Comparative Example 4 | LTO | - | - | - | - | - | - | 0.5 |

**[Table 3]**

| | Pressing Pressure before Winding (kN/m) | Pressing Pressure after Winding (kN/m) | Peel Strength σₛ (N/mm) | Electrolyte | | Battery Performance Evaluation | | |
|---|---|---|---|---|---|---|---|---|
| | | | | Composition | pH | Charge-discharge Efficiency (%) | Discharge Capacity (mAh/g) | Life Performance (%) |
| Example 1 | 0 | 5 | 0.05 | 12 M LiCl | 3 | 95 | 155 | 93 |
| Example 2 | 0 | 5 | 0.05 | 12 M LiCl | 3 | 90 | 130 | 90 |
| Example 3 | 0 | 5 | 0.05 | 12 M LiCl | 3 | 85 | 135 | 88 |
| Example 4 | 0 | 5 | 0.03 | 12 M LiCl | 3 | 88 | 127 | 71 |
| Example 5 | 0 | 5 | 0.05 | 12 M LiCl | 3 | 91 | 145 | 88 |
| Example 6 | 0 | 5 | 0.05 | 12 M LiCl | 3 | 94 | 148 | 90 |
| Example 7 | 0 | 5 | 0.05 | 12 M LiCl | 3 | 92 | 121 | 91 |
| Example 8 | 0 | 5 | 0.05 | 12 M LiCl | 3 | 93 | 128 | 89 |
| Example 9 | 0 | 5 | 0.04 | 12 M LiCl | 3 | 94 | 112 | 71 |
| Example 10 | 0 | 5 | 0.04 | 12 M LiCl | 3 | 90 | 110 | 65 |
| Example 11 | 0 | 5 | 0.08 | 12 M LiCl | 3 | 91 | 103 | 67 |
| Example 12 | 0 | 5 | 0.07 | 12 M LiCl | 3 | 84 | 105 | 76 |
| Example 13 | 0 | 5 | 0.05 | 12 M LiCl + 1 M LiOH | 14 | 96 | 157 | 94 |
| Example 14 | 0 | 5 | 0.06 | 12 M LiCl | 3 | 94 | 155 | 93 |
| Example 15 | 0 | 5 | 0.05 | 12 M LiCl | 3 | 95 | 155 | 93 |
| Example 16 | 0 | 5 | 0.05 | 12 M LiCl | 3 | 94 | 154 | 92 |
| Example 17 | 0 | 5 | 0.05 | 12 M LiCl | 3 | 90 | 144 | 90 |
| Example 18 | 0 | 5 | 0.05 | 12 M LiCl | 3 | 91 | 144 | 90 |
| Example 19 | 0 | 5 | 0.05 | 12 M LiCl | 3 | 92 | 146 | 90 |
| Example 20 | 0 | 5 | 0.05 | 12 M LiCl | 3 | 92 | 147 | 91 |
| Example 21 | 0 | 5 | 0.05 | 12 M LiCl | 3 | 91 | 144 | 90 |
| Example 22 | 0 | 5 | 0.05 | 12 M LiCl | 3 | 91 | 145 | 91 |
| Example 23 | 0 | 5 | 0.05 | 12 M LiCl | 3 | 93 | 250 | 90 |
| Example 24 | 0 | 5 | 0.05 | 12 M LiCl | 3 | 94 | 152 | 90 |
| Example 25 | 0 | 20 | 0.1 | 12 M LiCl | 3 | 93 | 115 | 80 |
| Example 26 | 0 | 5 | 0 *Peel Strength of Nonwoven Fabric: 0.09 kN/m | 12 M LiCl | 3 | 90 | 123 | 85 |
| Comparative Example 1 | 0 | 5 | - | 12 M LiCl | 3 | 70 | 64 | 45 |
| Comparative Example 2 | 0 | 5 | - | 12 M LiCl | 3 | 87 | 80 | 58 |
| Comparative Example 3 | 10 (140°C) | 5 | 0.2 | 12 M LiCl | 3 | 94 | 40 | 34 |
| Comparative Example 4 | 5 | 5 | - | 12 M LiCl | 3 | 0 | 0 | 0 |

The battery performance evaluation results in Table 3 show that the life performance is greatly improved in the secondary batteries prepared in Examples 1-26 as compared to those prepared in Comparative Examples 1-4.

The comparison between Comparative Examples 1 and 2 shows that between the negative electrode side and the positive electrode side, forming the composite layer on the negative electrode side is more effective. As can be seen from the comparison between Examples 1-26 and Comparative Examples 1-2, forming the composite layers on both the negative electrode and the positive electrode further improves life performance.

In all of Examples 1-25, the peel strength σₛ between the first composite layer on the negative electrode side and the second composite layer on the positive electrode side had a value of 0.1 N/mm or less. That is, the first composite layer and the second composite layer were not joined or bound at the interface therebetween. In Example 26, the cellulose nonwoven fabric was interposed between the first composite layer and the second composite layer, and therefore the peel strength σₛ between them was deemed to be zero; moreover, the peel strength of each composite layer with respect to the cellulose nonwoven fabric was 0.1 N/mm or less. In contrast, in Comparative Example 3, the secondary battery in which the peel strength σₛ between the composite layers was 0.2 N/mm showed good charge-discharge efficiency, but the life performance was deteriorated. In addition, as indicated by the low discharge capacity, it can be seen that the battery resistance was high in Comparative Example 3. The tendency thereof was significant in Comparative Example 4 in which the secondary battery had a single composite layer, and since the capacity had dropped to 1/10 of the initial capacity at the 50th cycle, the charge-discharge cycle was halted before reaching the 100th cycle. Therefore, in Table 3, each battery performance is denoted as zero for convenience. In the battery using the aqueous electrolyte, gas (hydrogen, oxygen, or the like) is gradually generated by electrolysis of water during charge or discharge in the voltage range of the above-described performance evaluation test conditions. It can be seen that the generated gas not being released outside the system led to deterioration in life performance in Comparative Examples 3 and 4.

In Examples 9 and 10, the porosity of one of the first composite layer and the second composite layer exceeded 20%. In Examples 11 and 12, one of the peel strength σₙ between the first composite layer and the negative electrode and the peel strength σₚ between the second composite layer and the positive electrode was less than 0.3 N/mm. In these Examples 9-12, the life performance of the secondary battery was slightly low. It is seen that due to the high porosity in Examples 9 and 10 and the somewhat weak joining of the composite layers to the electrodes in Examples 11 and 12, water in the electrolyte easily flowed near the electrode, whereby the side reaction of water and the electrode was not suppressed as much. Nevertheless, in Examples 9-12, much higher life performance was obtained as compared to Comparative Examples 1-4, and it therefore can be seen that formation of the composite layers on both the negative electrode and the positive electrode is effective in improving life performance.

The comparison between Examples 1-12 and Examples 14-16 shows that even if the polymeric material used for the composite layer differs, the above-described effect can be obtained. Furthermore, the comparison between Examples 1-12 and Examples 17-22 shows that even if the inorganic solid particles used for the composite layer differ, the above-described effect can be obtained. Similarly, in a case where the electrode active material differs as in Examples 23 and 24, as well, the effect can be obtained.

Similarly, in a case where a nonwoven fabric separator is introduced between the first composite layer and the second composite layer as in Example 26, it can be seen that the effects of the charge-discharge efficiency and the life performance can be obtained. However, addition of the nonwoven fabric increases the volume of the electrode group, leading to a reduction in the energy density per volume. Thus, use of another separator in addition to the composite layer requires consideration of energy density.

As such, the comparison between Examples 1-26 and Comparative Examples 1-4 shows that a secondary battery having good charge-discharge efficiency and life performance can be provided by forming composite layers on both the negative electrode and the positive electrode and providing a state in which the composite layers are not bound to each other.

According to one or more approach and example described above, provided is a secondary battery including a negative electrode, a positive electrode, a first composite layer, a second composite layer, and an aqueous electrolyte. The first composite layer and the second composite layer are respectively joined to the negative electrode and the positive electrode, and each contain inorganic solid particles and a polymeric material. A first principal surface of the first composite layer on a reverse side with respect to a surface joined to the negative electrode and a second principal surface of the second composite layer on a reverse side with respect to a surface joined to the positive electrode face one another or are in contact with one another. A peel strength σₛ between the first principal surface and the second principal surface is 0 N/mm to 0.1 N/mm. According to the above configuration, a secondary battery and battery pack exhibiting high charge-discharge efficiency and life performance are provided, as well as a vehicle and stationary battery including the battery pack.

The present disclosure also encompasses the following approaches of secondary batteries:
1. A secondary battery comprising: a negative electrode; a positive electrode; a first composite layer joined to the negative electrode, the first composite layer comprising a first principal surface on a reverse side with respect to a surface joined to the negative electrode, and containing inorganic solid particles and a polymeric material; a second composite layer joined to the positive electrode, the second composite layer comprising a second principal surface on a reverse side with respect to a surface joined to the positive electrode and facing the first principal surface, and containing inorganic solid particles and a polymeric material; and an aqueous electrolyte comprising water, a peel strength σₛ between the first principal surface and the second principal surface being 0.1 N/mm or less.
2. The secondary battery according to clause 1, wherein the first composite layer has a thickness tₙ of 50 µm or less, and the second composite layer has a thickness tₚ of 50 µm or less.
3. The secondary battery according to clause 1 or 2, wherein the first composite layer and the second composite layer each have a porosity of 20% or less.
4. The secondary battery according to any one of clauses 1 to 3, wherein a peel strength σₙ between the negative electrode and the first composite layer is greater than 0.3 N/mm, and a peel strength σₚ between the positive electrode and the second composite layer is greater than 0.3 N/mm.
5. The secondary battery according to any one of clauses 1 to 4, wherein the negative electrode comprises a negative electrode active material, the negative electrode active material comprising a compound having a lithium ion insertion-extraction potential of 1 V to 3 V (vs. Li/Li⁺) with respect to the oxidation-reduction potential of lithium.
6. The secondary battery according to any one of clauses 1 to 5, wherein the aqueous electrolyte has a pH of 9 or more.
7. A battery pack comprising the secondary battery according to any one of clauses 1 to 6.
8. The battery pack according to clause 7, further comprising:
   an external power distribution terminal; and
   a protective circuit.
9. The battery pack according to clause 7 or 8, comprising plural of the secondary battery, the plural secondary batteries being electrically connected in series, in parallel, or in combination of in series and in parallel.
10. A vehicle comprising the battery pack according to any one of clauses 7 to 9.
11. The vehicle according to clause 10, which comprises a mechanism configured to convert kinetic energy of the vehicle into regenerative energy.
12. A stationary power supply comprising the battery pack according to any one of clauses 7 to 9.

While certain approaches have been described, these approaches have been presented by way of example only, and are not intended to limit the scope of the claims. Indeed, the secondary batteries, battery packs, vehicles, and the like described herein may be embodied in a variety of other forms; furthermore, various omissions, substitutions and changes in the form of the secondary batteries, battery packs, vehicles, stationary power supplies, and the like described herein may be made.

## Claims

1. A secondary battery comprising:
a negative electrode;
a positive electrode;
a first composite layer joined to the negative electrode, the first composite layer comprising a first principal surface on a reverse side with respect to a surface joined to the negative electrode, and containing inorganic solid particles and a polymeric material;
a second composite layer joined to the positive electrode, the second composite layer comprising a second principal surface on a reverse side with respect to a surface joined to the positive electrode and facing the first principal surface, and containing inorganic solid particles and a polymeric material; and
an aqueous electrolyte comprising water,
a peel strength σₛ between the first principal surface and the second principal surface being 0.1 N/mm or less.

2. The secondary battery according to claim 1, wherein the first composite layer has a thickness tₙ of 50 µm or less, and the second composite layer has a thickness tₚ of 50 µm or less.

3. The secondary battery according to claim 1 or 2, wherein the first composite layer and the second composite layer each have a porosity of 20% or less.

4. The secondary battery according to any one of claims 1 to 3, wherein a peel strength σₙ between the negative electrode and the first composite layer is greater than 0.3 N/mm, and a peel strength σₚ between the positive electrode and the second composite layer is greater than 0.3 N/mm.

5. The secondary battery according to any one of claims 1 to 4, wherein the negative electrode comprises a negative electrode active material, the negative electrode active material comprising a compound having a lithium ion insertion-extraction potential of 1 V to 3 V (vs. Li/Li⁺) with respect to the oxidation-reduction potential of lithium.

6. The secondary battery according to any one of claims 1 to 5, wherein the aqueous electrolyte has a pH of 9 or more.

7. A battery pack comprising the secondary battery according to any one of claims 1 to 6.

8. The battery pack according to claim 7, further comprising:
an external power distribution terminal; and
a protective circuit.

9. The battery pack according to claim 7 or 8, comprising plural of the secondary battery, the plural secondary batteries being electrically connected in series, in parallel, or in combination of in series and in parallel.

10. A vehicle comprising the battery pack according to any one of claims 7 to 9.

11. The vehicle according to claim 10, which comprises a mechanism configured to convert kinetic energy of the vehicle into regenerative energy.

12. A stationary power supply comprising the battery pack according to any one of claims 7 to 9.
